(19)

Europäisches
Patentamt
European
Patent Office
Office européen
des brevets

(11)  **EP 4 345 135 B1**

(12)  **EUROPEAN PATENT SPECIFICATION**

(45) Date of publication and mention
of the grant of the patent:
**05.03.2025   Bulletin 2025/10**

(21) Application number: **22199023.7**

(22) Date of filing: **30.09.2022**

(51) International Patent Classification (IPC):
**C08L 23/14** *(2006.01)*

(52) Cooperative Patent Classification (CPC):
(C-Sets available)
**C08L 23/14;** C08L 2207/20          (Cont.)

(54) **POLYOLEFIN COMPOSITION COMPRISING POLYPROPYLENE HOMOPOLYMER, POLYPROPYLENE BLOCK COPOLYMER AND RECYCLED PLASTIC MATERIAL**

POLYOLEFINZUSAMMENSETZUNG MIT POLYPROPYLENHOMOPOLYMER, POLYPROPYLENBLOCKCOPOLYMER UND RECYCELTEM KUNSTSTOFFMATERIAL

COMPOSITION DE POLYOLÉFINE COMPRENANT UN HOMOPOLYMÈRE DE POLYPROPYLÈNE, UN COPOLYMÈRE SÉQUENCÉ DE POLYPROPYLÈNE ET UNE MATIÈRE PLASTIQUE RECYCLÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.04.2024   Bulletin 2024/14**

(73) Proprietor: **Borealis AG**
**1020 Vienna (AT)**

(72) Inventors:
• **BRAUN, Hermann**
**4021 Linz (AT)**
• **JERABEK, Michael**
**4021 Linz (AT)**

• **SACCETTI, Francisco**
**4021 Linz (AT)**
• **SALLES, Christophe**
**92400 Courbevoie (FR)**
• **KAHLEN, Susanne Margarete**
**4021 Linz (AT)**
• **KASTNER, Erwin**
**4021 Linz (AT)**

(74) Representative: **Maikowski & Ninnemann**
**Patentanwälte Partnerschaft mbB**
**Postfach 15 09 20**
**10671 Berlin (DE)**

(56) References cited:
**EP-A1- 4 063 452          WO-A1-2022/084236**
**WO-A1-2022/200588**

EP 4 345 135 B1

(52) Cooperative Patent Classification (CPC): (Cont.)

C-Sets
**C08L 23/14, C08L 23/12, C08L 53/00, C08K 7/14**

## Description

The invention relates to a polyolefin composition comprising at least one polypropylene homopolymer, at least one polypropylene block copolymer and recycled plastic material, and to an article comprising the polyolefin composition.

## Description

Polyolefins, in particular polyethylene and polypropylene are increasingly consumed in large amounts in a wide range of applications, including packaging for food and other goods, fibres, automotive components, and a great variety of manufactured articles. Polyethylene based materials are a particular problem as these materials are extensively used in packaging. Taking into account the huge amount of waste collected compared to the amount of waste recycled back into the stream, there is still a great potential for intelligent reuse of plastic waste streams and for mechanical recycling of plastic wastes.

Generally, recycled quantities of polypropylene on the market are mixtures of both polypropylene (PP) and polyethylene (PE), this is especially true for post-consumer waste streams. Moreover, commercial recyclates from post-consumer waste sources are conventionally cross-contaminated with non-polyolefin materials such as polyethylene terephthalate, polyamide, polystyrene or non-polymeric substances like wood, paper, glass or aluminum. These cross-contaminations drastically limit final applications of recycling streams such that no profitable final uses remain. Polyolefinic recycling materials, especially from post-consumer waste streams, are a mixture of PE and PP. The better the quality of the recyclate is, the less available it is and the more expensive it is.

Customers that are asking for recyclates require similar stiffness-impact strength as virgin ones. This is also valid for reinforced glass fibre compounds for structural products. The quality issue in recyclates compared to the virgin ones can be to some extent overcome by reinforcing the recyclates, where the reinforcement particles physically bond the dissimilar domains (PP and PE).

Compositions comprising virgin polymers (i.e. polymers used for the first time) and recycled mixed plastics have been studied.

WO 2014167493 A1 describes a process for the preparation of a polyolefin mixture comprising the step (a) of mixing together a base polymeric mixture MB and a polymeric mixture MPR, wherein said mixture MPR is obtained from the recycling of post-consumer plastic materials. Recycled mixed plastics reinforced with glass fibre (GF) have also been studied. For example, recycled PP or PP/PE mixtures have been reinforced with GF or a hybrid GF with other fillers. EP 2845876 B1 describes a composition containing two or more resins and a glass fiber, comprising: a resin mixture comprising waste polyethylene (PE) and waste polypropylene (PP); a long glass fiber with a length of 10 mm or greater; and a rubber-based resin, wherein the composition comprises, based on 100 parts by weight of the resin mixture, 3-30 parts by weight of the long glass fiber, 10-50 parts by weight of the rubber-based resin, and 10-35 parts by weight of LDPE.

EP 3406662 A1 describes structurally-reinforced plastic composite products produced with recycled waste glass fibers and recycled polymer compounds and process for making the same. The reinforced composite article, comprises: a recycled fiberglass collected from waste streams and functioning as a filler, the recycled fiberglass being 30-70% of a total weight of the reinforced composite article; a colorant of 1-2 % of the total weight of the reinforced composite article; and a recycled resin collected from the waste streams and substantially wetting-out the recycled glass fiber by the black colorant and a chemical binder. The recycled resin comprises at least one of high density polyethylene (HDPE), polypropylene (PP) or an engineering grade resin.

WO2018086959 A1 refers to a glass fiber filler-containing polyolefin composition and article comprising virgin homopolymers and copolymers, 5-30 wt% glass fiber filler; and a compatibilizer.

WO 2022/084236 A1 discloses polyolefin compositions comprising polypropylene homopolymer, recycled plastic material and glass fibers.

Bajracharya et al. (Experimental and theoretical studies on the properties of injection moulded glass fibre reinforced mixed plastics composites." Composites Part A: Applied Science and Manufacturing, 2016, 84: 393-405) and Bajracharya, et al. (Durability characteristics and property prediction of glass fibre reinforced mixed plastics composites." Composites Part B: Engineering, 2017, 116: 16-29) use PE/PP recycle in the form of flakes by Repeat Plastics (Replas) Pty of Australia which was collected from post-consumer and post-industrial plastic waste. The recyclate had tensile modulus of 906 MPa. They were reinforced with 10, 20 and 30 % GF (length of 4.0 mm and diameter of 13.7 $\mu$m). A maximum tensile modulus of 3068 MPa was achieved by 30 % GF.

Thus, there are examples of reinforced recyclates with a good tensile modulus and impact strength at the same time. However, it would be of an advantage to provide polyolefin compositions having similar properties as virgin polymers, but comprise also post-consumer recyclate (PCR) to make the final solutions more economically friendly in regard to $CO_2$ footprint.

Thus, it was an object of the invention to provide a polyolefin composition comprising a blend of polyolefin material recovered from waste plastic material and virgin polymer with an improved stiffness-impact strength balance and a high tensile strength.

This object has been achieved by providing a polyolefin composition comprising:

a) 5-30 wt% (based on the overall weight of the polyolefin composition) of at least one polypropylene homopolymer,
b) 1-15 wt% (based on the overall weight of the polyolefin composition) of at least one polypropylene block copolymer,
c) 20-50 wt% (based on the overall weight of the polyolefin composition) of a mixed-plastics polypropylene blend of recycled material having

(i) a crystalline fraction (CF) content determined according to CRYSTEX QC analysis in the range from 85.0 - 95.0 wt%, and
(ii) a soluble fraction (SF) content determined according to CRYSTEX QC analysis in the range from 5.0 - 15.0 wt%, whereby
(iii) said crystalline fraction (CF) has a propylene content (C3(CF)) as determined by FT-IR spectroscopy calibrated by quantitative $^{13}$C-NMR spectroscopy, in the range from 93.0 - 99.0 wt%, and whereby
(iv) said crystalline fraction (CF) has an ethylene content (C2(CF)), as determined by FT-IR spectroscopy calibrated by quantitative $^{13}$C-NMR spectroscopy, in the range from 1.0 to 6.0 wt.-%; and
(v) said soluble fraction (SF) has an intrinsic viscosity (iV(SF)) in the range from 1.0-2.0 dl/g, and whereby
(vi) the mixed-plastics polypropylene blend has a CIELAB color space (L*a*b*) of

- L* from 30 to 97.0, in particular from 50 to 97.0;
- a* from -10.0 to 16.0, in particular from -8 to < 10.0;
- b* from -5.0 to 25.0, in particular from -2 to 22.0;

d) 35-55 wt% (based on the overall weight of the polyolefin composition) of glass fibers;
and optionally further additives, wherein the sum of all ingredients adds always up to 100 wt%,
wherein the polyolefin composition has

- a tensile modulus at 23°C of at least 7000 MPa (ISO 527-2),
- a tensile stress at yield at 23°C of at least 90 MPa (ISO 527-2), and
- an impact strength (ISO179-1, Charpy 1eA +23°C) of at least 8.5 kJ/m$^2$.

Accordingly, a polypropylene recyclate of high quality is mixed with a virgin polypropylene homopolymer, a virgin polypropylene block copolymer and glass fibres to obtain a polyolefin composition with excellent mechanical properties, in particular excellent tensile strength and tensile stiffness, while retaining properties of the final composition comparable to virgin polymers.

The present recyclate containing composition is characterized by a high tensile modulus combined with a high tensile stress. The performance of the combination of the different kinds of polymers and recyclates with glass fiber reinforcement is not easily predictable. It is in particular difficult to predict a tensile modulus and tensile stress due to the interaction between the various components. In addition, recyclate polyolefins are typically contaminated with polar polymers (e.g. PA, PET) or other non-POs such as PS or fillers etc., which make an obvious calculation of the final mechanical performance more difficult.

The term "virgin" denotes the newly produced materials and/or objects prior to first use and not being recycled. In case that the origin of the polymer is not explicitly mentioned the polymer is a "virgin" polymer.

For the purposes of the present description and of the subsequent claims, the term "recycled" is used to indicate that the material is recovered from post-consumer waste and/or industrial waste. Namely, post-consumer waste refers to objects having completed at least a first use cycle (or life cycle), i.e. having already served their first purpose and been through the hands of a consumer; while industrial waste refers to the manufacturing scrap which does normally not reach a consumer. In the gist of the present invention "recycled polymers" may also comprise up to 17 wt%, preferably up to 3 wt%, more preferably up to 1 wt% and even more preferably up to 0.1 wt% based on the overall weight of the recycled polymer of other components originating from the first use. Type and amount of these components influence the physical properties of the recycled polymer. The physical properties given below refer to the main component of the recycled polymer.

Mixed plastics is defined as the presence of small amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use. As a matter of definition, "mixed plastics" can be equated with detectable amounts of polystyrene and/or polyamide-6 and/or limonene and/or fatty acids.

The total amount of all virgin polypropylene homopolymers used in the present polyolefin composition adds up according to the invention to a range between 5-30 wt%, preferably between 8-25 wt%, more preferably between 9-22 wt% (based on the overall weight of the polyolefin composition).

The total amount of all virgin polypropylene block copolymers used in the present polyolefin composition adds up according to the invention to a range between 1-15 wt%, preferably between 3-10 wt%, more preferably between 4-8 wt% (based on the overall weight of the polyolefin composition).

The amount of the mixed-plastics polypropylene blend, which is preferably recovered from a waste plastic material derived from post-consumer and/or post-industrial waste, used in the present polyolefin composition is according to the invention in a range between 20-50 wt%, preferably between 25-45 wt%, more preferably between 30-42 wt% (based on the overall weight of the polyolefin composition).

The amount of glass fibers used in the present polyolefin composition is according to the invention in a range between 35-55 wt%, preferably between 38-50 wt%, more preferably between 38-45 wt%, (based on the overall weight of the polyolefin composition).

It is to be understood that further additives may also be included in the polyolefin composition and the sum of all ingredients adds always up to 100 wt% in each of the embodiments described herein.

According to an embodiment the present polyolefin composition comprises

a) 8-28 wt%, more preferably 9-22 wt% (based on the overall weight of the polyolefin composition) of the at least one polypropylene homopolymer,

b) 3-10 wt%, more preferably 4-8 wt% (based on the overall weight of the polyolefin composition) of at least one polypropylene block copolymer,

c) 25-45 wt%, more preferably 30-42 wt% (based on the overall weight of the polyolefin composition) of the mixed-plastics polypropylene blend;

d) 38-50 wt%, preferably 38-45 wt% (based on the overall weight of the polyolefin composition) of glass fibers;

and optionally further additives, wherein the sum of all ingredients adds up to 100 wt%.

In an embodiment, the present polyolefin composition is further characterized by a melt flow rate $MFR_2$ (ISO 1133, 2.16 kg, 230°C) of at least 3.0 g/10 min, preferably at least 3.5 g/10 min, more preferably at least 4.0 g/ 10 min, in particular in the range between 3.0 and 15 g/10 min, preferably between 3.5 and 10 g/10min, more preferably between 4.0 and 10 g/10min.

In another embodiment, the present polyolefin composition is characterized by a tensile modulus (ISO 527-2) of at least 8000 MPa, preferably of at least 8500 MPa, more preferably of at least 9000 MPa, in particular in a range between 8000 and 15000 MPa, more in particular in a range between 8000 and 10000 MPa.

In a further embodiment, the present polyolefin composition has a tensile stress at yield at 23°C (50 mm/min, ISO 527-2) of at least 95 MPa, preferably of at least 100 MPa, more preferably of at least 105 MPa, in particular in a range between 90 and 200 MPa, more in particular in a range between 100 and 150 MPa.

In still another embodiment, the present polyolefin composition has a tensile stress at break at 23°C (50 mm/min, ISO 527-2) of at least 90 MPa, preferably at least 95 MPa, more preferably of at least 100 MPa, even more preferably of at least 105 MPa, in particular in a range between 90 and 200 MPa, more in particular in a range between 100 and 150 MPa.

In yet a further embodiment, the present polyolefin composition has an impact strength (ISO179-1, Charpy 1eA +23°C) of at least 9.0 $kJ/m^2$, preferably of at least 9.5 $kJ/m^2$, in particular in a range between 9.0 and 15.0 $kJ/m^2$, more in particular in a range between 9.5 and 13.0 $kJ/m^2$, even more particular in a range between 10 and 12.0 $kJ/m^2$.

Polypropylene Virgin Homopolymers

In an embodiment of the present polyolefin composition more than one virgin polypropylene homopolymer may be used. However, the use of one virgin polypropylene homopolymer is preferred.

Thus, in an embodiment the present polyolefin composition may comprise

a1) at least one first polypropylene homopolymer;

a2) at least one second polypropylene homopolymer;

wherein the at least one first polypropylene homopolymer, and the at least one second polypropylene homopolymer differ from each other in their melt flow rate $MFR_2$ (230°C, 2.16 kg load, measured according to ISO 1133).

Thus, the present polyolefin composition may comprise two virgin polypropylene homopolymers with different melt flow rates. This allows for an easy adjustment of the melt flow rate of the final polyolefin composition.

The polypropylene homopolymer used as virgin homopolymers in the present polyolefin composition is selected from a group comprising

- a polypropylene homopolymer (PPH-1) having a melt flow rate $MFR_2$ (230°C, 2.16 kg, measured according to ISO 1133) in the range of 5 to 15 g/10 min, preferably of 5 to 10 g/10min, more preferably of 8 g/10 min; and/or
- a polypropylene homopolymer (PPH-2) having a melt flow rate $MFR_2$ (230°C, 2.16 kg, measured according to ISO 1133) in the range of range of 10 to 30 g/10min, preferably of 15 to 25 g/10min, more preferably of 20 g/10 min.

The properties and features of the different polypropylene homopolymers that may be used in the present polyolefin composition are described in the following.

Polypropylene homopolymer (PPH-1):

The at least one polypropylene homopolymer (PPH-1) has a melt flow rate $MFR_2$ (230°C, 2.16 kg, measured according to ISO 1133) in the range of 5 to 15 g/10 min, preferably of 5 to 10 g/10min, more preferably of 8 g/10 min; and a tensile modulus (ISO178) of higher than 800 MPa, preferably higher than 1000 MPa, more preferably of higher than 1300 MPa

The polypropylene homopolymer (PPH-1) has a melting temperature of at least 150°C; preferably of at least 158°C, preferably in the range of 158 to 167°C, like 162°C. The polypropylene homopolymer (PPH-1) may have a flexural modulus measured according to ISO 178 of at least 500 MPa, preferably at least 1000 MPa, preferably in the range of 1200 to 2000 MPa, like 1400 MPa.

A preferred material for polypropylene homopolymer (PPH-1) is inter alia commercially available from Borealis AG (Austria) under the name of HD601CF. Alternative suitable materials are high crystallinity polypropylene homopolymers as described for example in WO 03/031174 A2.

Polypropylene homopolymer (PPH-2):

The at least one polypropylene homopolymer (PPH-2) has a melt flow rate $MFR_2$ (230°C, 2.16 kg, measured according to ISO 1133) in the range of 10 to 30 g/10min, preferably of 15 to 25 g/10min, preferably of 20 g/10 min; and a tensile modulus (ISO 527-2) of higher than 1800 MPa, preferably higher than 2000 MPa, most preferably of 2200 MPa.

The polypropylene homopolymer (PPH-2) consists substantially, i.e. of more than 99.7 wt%, still more preferably of at least 99.8 wt%, of propylene units, based on the weight of the propylene homopolymer (PPH-2). In a preferred embodiment only propylene units are detectable in the propylene homopolymer (PPH-2).

It is appreciated that the polypropylene homopolymer (PPH-2) features a low amount of xylene cold soluble (XCS) fraction. The polypropylene homopolymer (PPH-2) may have an amount of xylene cold solubles (XCS) fraction of not more than 4.0 wt%, preferably not more than 3.0 wt%, more preferably not more than 2.5 wt%, like in the range of 0.1 to 4.0 wt%, preferably in the range of 0.1 to 3.0 wt%, more preferably in the range from 0.1 to 2.5 wt%, based on the weight of the polypropylene homopolymer (PPH-2).

The polypropylene homopolymer (PPH-2) may have a heat deflection temperature (HDT) measured according to ISO 75-2 of at least 90°C. preferably at least 100°C, more preferably at least 115°C, like in the range of 90 to 160°C, preferably in the range of 100 to 150°C, more preferably 115 to 130°C.

The polypropylene homopolymer (PPH-2) may have a Charpy Impact Strength measured according to ISO 179-1eA:at 23°C of at least 1.0 kJ/m$^2$, preferably, at least 2.0 kJ/m$^2$, like in the range of 1.0 to 10 kJ/m$^2$, preferably in the range of 2.0 to 5.0 kJ/m$^2$, like 2.5 kJ/m$^2$. The polypropylene homopolymer (PPH-2) may have a flexural modulus measured according to ISO 178 of at least 500 MPa, preferably at least 1500 MPa, like in the range of 500 to 3500 MPa, preferably in the range of 1500 to 2500 MPa, like 2000 MPa.

The polypropylene homopolymer (PPH-2) may comprise a nucleating agent, which is preferably a polymeric nucleating agent, more preferably an alpha-nucleating agent, e.g. a polymeric alpha-nucleating agent. The alpha-nucleating agent content of the polypropylene homopolymer (PPH-2), is preferably up to 5.0 wt%. In a preferred embodiment, the polypropylene homopolymer (PPH-2) contains not more than 3000 ppm, more preferably of 1 to 2000 ppm of alpha-nucleating agent.

The polypropylene homopolymer (PPH-2) is known in the art and for example commercially available from Borealis AG under the name of HF955MO. The use of PPH-2 is preferred.

Virgin Polypropylene Block Copolymers

The properties and features of the virgin polypropylene block copolymer that may be used in the present polyolefin composition is described in the following.

Polypropylene Block Copolymer (PBC-1)

In an embodiment the at least one polypropylene block copolymer (PBC-1) has a melt flow rate (230°C/2.16 kg) of at least 0.10 g/10 min, preferably of at least 0.20 g/10 min, in particular in a range between 0.20 and 2.0 g/10 min, more in particular in a range between 0.20 and 1.5 g/10 min, such as 0.20-0.32 g /10 min.

The polypropylene block copolymer (PBC-1) may have a Charpy Notched Impact Strength (NIS) measured according to ISO 179-1 eA at 23°C of at least 40 kJ/m$^2$, preferably, at least 50 kJ/m$^2$, like in the range of 40 to 60 kJ/m$^2$, preferably in the range of 45 to 55 kJ/m$^2$, like 50 kJ/m$^2$. The polypropylene block copolymer (PBC-1) may have a tensile stress at yield measured according to ISO 527-2 of at least 25 MPa, preferably at least 30 MPa, like in the range of 25 to 45 MPa, preferably in the range of 30 to 35 MPa, like 31 MPa. The density may be in the range of 800 to 1000 kg/m$^3$, preferably in the range of 850 to 950 kg/m$^3$, like 900 kg/m$^3$.

The polypropylene block copolymer (PBC-1) is known in the art and for example commercially available from Borealis AG as BA212E.

Mixed-plastics polypropylene blend of recycled material

The mixed-plastics polypropylene blend is obtained from recycled waste stream of post-consumer plastic trash.

Several possible feedstocks from municipal trash collection systems are commercially available and allow providing post-consumer plastic trash. Depending on the participation of the consumer, the purity of those feedstocks will differ which is usually indicated by the collecting systems. It is further possible to screen the intermediate after step b) for the presence of apparently very old ('ancient') mainly colorless / natural plastic articles. Discoloration (e.g. pronounced yellowing) and/or pronounced scratches of the mainly colorless / natural plastic articles allow the sorting. Such step makes it possible to get rid of so-called substances of very high concern. Those substances such as Pb, Hg, polybrominated diphenyl ethers, and the like have been banned for quite some time but are still present in the real world as consumers tend to stockpile plastic articles e.g. in the form of plastic toys for many years and eventually throw them away into collection systems. The additional screening step can be assisted by analysis controls for said substances of very high concern.

Odor control and assessment is possible by a number of methods. An overview is provided inter alia by Demets, Ruben, et al. "Development and application of an analytical method to quantify odour removal in plastic waste recycling processes." Resources, Conservation and Recycling 161 (2020): 104907.

The mixed-plastics polypropylene blend typically has a melt flow rate (ISO1133, 2.16kg; 230°C) of 2.0 to 50 g/10min. The melt flow rate can be influenced by splitting post-consumer plastic waste streams, for example, but not limited to: originating from extended producer's responsibility schemes, like from the German DSD, or sorted out of municipal solid waste into a high number of pre-sorted fractions and recombine them in an adequate way. As a further way of modifying melt flow rate of the final mixed-plastics polypropylene blend peroxides can be introduced in the final pelletization step. Usually MFR ranges from 2.0 to 50 g/10min, preferably from 5.0 to 40 g/10min, more preferably from 10 to 30 g/10min, and most preferably from 15 to 25 g/10min. This MFR range particularly holds for the non-visbroken mixed-plastics polypropylene blend. Visbreaking allows increase of MFR to 30 g/10 min or 40 g/10 min.

Typically, the recycling nature can be assessed by the presence of one or more of the following substances:

a) polystyrene
b) polyamide-6
c) limonene as determined by using solid phase microextraction (HS-SPME-GC-MS)
d) fatty acids as determined by using solid phase microextraction (HS-SPME-GC-MS).

Presence means detectable limits. The detection limit for limonene and fatty acids in solid phase microextraction (HS-SPME-GC-MS) is below 0.1 ppm, i.e. traces of these substances easily allow figuring out recycling nature.

The following amounts are preferred

a) polystyrene: 0 to 2.0 wt%; more preferred 0 to 0.5 wt%
b) polyamide-6: 0 to 1.5 wt%; more preferred 0 to 0.5 wt%
c) limonene as determined by using solid phase microextraction (HS-SPME-GC-MS):0.1 ppm to 50 ppm
d) fatty acids as determined by using solid phase microextraction (HS-SPME-GC-MS): 0.1 ppm to 200 ppm, more preferably 50 ppm.

It goes without saying that the amounts of a), b), c) and d) should be as low as possible. In a specifically preferred embodiment the mixed-plastics polypropylene blend is free of polystyrene and is free of polyamide meaning both polymers are below the detection limit.

Different mixed-plastics polypropylene blends may be used.

Mixed-plastics polypropylene blend (Blend A1)

In one embodiment, the mixed-plastics polypropylene blend (Blend A1) has

(i) a crystalline fraction (CF) content determined according to CRYSTEX QC analysis in the range from 86.0 to 94.0 wt%, more preferably 90.0 to 94.0 wt.%, and

(ii) a soluble fraction (SF) content determined according to CRYSTEX QC analysis in the range from 6.0 to 14.0 wt%, more preferably 6.0 to 10.0 wt%, whereby

(iii) said crystalline fraction (CF) has a propylene content (C3(CF)) as determined by FT-IR spectroscopy calibrated by quantitative $^{13}$C-NMR spectroscopy, in the range from 93.0 - 99.0 wt%, preferably from 95.0 to 98.0 wt.%; and whereby

(iv) said crystalline fraction (CF) has an ethylene content (C2(CF)), as determined by FT-IR spectroscopy calibrated by quantitative $^{13}$C-NMR spectroscopy, in the range from 1 to 7 wt%; more preferably 2.0 to 5.0 wt%, even more preferably 2.5 to 3.5 wt%; and

(v) said soluble fraction (SF) has an intrinsic viscosity (iV(SF)) in the range from 1.2 to below 1.8 dl/g, preferably 1.40 to 1.70 dl/g; whereby

(vi) the mixed-plastics polypropylene blend has a CIELAB color space (L*a*b*) of

- L* from 40 to 85, preferably from 50 to 75;
- a* from -8.00 to 10, more preferably -5.0 to 0.0;
- b* from 0.0 to below 10.0, more preferably 0.0 to below 5.00.

The mixed-plastics polypropylene blend (Blend A1) has preferably a melt flow rate MFR$_2$ (ISO 1133, 2.16 kg, 230°C) of at least 10.0 g/10 min, preferably at least 12.0 g/10 min, more preferably at least 14.0 g/ 10 min, in particular in the range between 10.0 and 30.0 g/10 min, preferably between 12.0 and 25.0 g/10min, more preferably between 14.0 and 20.0 g/10min.

The crystalline fraction (CF) content determined according to CRYSTEX QC analysis of Blend A1 is preferably in the range from 90.0 to 94.0 wt.-% and the soluble fraction (SF) content determined according to CRYSTEX QC analysis is in the range of 6.0 to 10.0 wt.-%.

The mixed-plastics polypropylene blend (Blend A1) preferably has a soluble fraction (SF) obtained by CRYSTEX QC analysis with a content of ethylene (C2(SF)), as determined by FT-IR spectroscopy calibrated by quantitative $^{13}$C-NMR spectroscopy, in the range from 20.0 to 30.0 wt%, more preferably 20.0 to 28.0 wt%, even more preferably 22.0 to 26.0 wt% and most preferably 23.0 to 25.0 wt%.

The mixed-plastics polypropylene blend (Blend-A1) is preferably characterized by an odor (VDA270-B3) of 5.0 or lower, preferably 4.7 or lower, more preferably 4.0 or lower, such as 3.5.

In a further aspect the mixed-plastics polypropylene blend (Blend A1) has a Large Amplitude Oscillatory Shear - Non-Linear Factor (LAOS -NLF) (190°C; 1000%) higher than 2.6, whereby

$$LAOS - NLF = \left| \frac{G_1'}{G_3'} \right|$$

whereby

G$_1$' is the first order Fourier Coefficient
G$_3$' is the third order Fourier Coefficent

The mixed-plastics polypropylene blend (Blend-A1) has a tensile modulus (ISO 527-2 at a cross head speed of 1 mm/min; 23°C) using injection molded specimens as described in EN ISO 1873-2 (dog bone shape, 4 mm thickness) of at least 1300 MPa, preferably at least 1330 MPa, such as 1440 MPa..

The mixed-plastics polypropylene blend (Blend A1) turned out to have processability reflected by a shear thinning factor (STF) being the ratio of eta 0.05 and eta 300 of above 9.0, preferably above 10.0.

The Charpy notched impact strength (non-instrumented, ISO 179-1 at +23 °C) of the mixed-plastics polypropylene blend (Blend-A1) is preferably higher than 4.5 kJ/m$^2$, more preferably higher than 5.0 kJ/m$^2$, most preferably higher than 5.4 kJ/m$^2$, such as 6.9 kJ/m$^2$.

A method of for obtaining a mixed-plastics polypropylene Blend A1 comprises the following steps:

a) providing a precursor mixed plastic recycling stream (A);

b) sieving the precursor mixed plastic recycling stream (A) to create a sieved mixed plastic recycling stream (B) having only articles with a longest dimension in the range from 30 to 400 mm;

c) sorting the sieved mixed plastic recycling stream (B) by means of one or more optical sorters wherein the sieved mixed plastic recycling stream (B) is at least sorted by colour and optionally also by polyolefin type and/or article form, thereby generating one or more single-colour sorted polyolefin recycling stream(s) (C) and a mixed-colour sorted polyolefin recycling stream (CM), wherein each of the one or more single-colour sorted polyolefin recycling stream(s) (C) and the mixed-colour sorted polyolefin recycling stream (CM) are subjected separately to steps d) and beyond;

d) shredding the sorted polyolefin recycling stream (C or CM) to form a flaked polyolefin recycling stream (D);

e) washing the flaked polyolefin recycling stream (D) with a first aqueous washing solution (W1) without the input of thermal energy, thereby generating a first suspended polyolefin recycling stream (E);

f) removing at least part of the first aqueous washing solution (W1), preferably substantially all of the first aqueous washing solution (W1), from the first suspended polyolefin recycling stream (E) to obtain a first washed polyolefin recycling stream (F);

g) washing the first washed polyolefin recycling stream (F) with a second aqueous washing solution (W2) thereby generating a second suspended polyolefin recycling stream (G), wherein sufficient thermal energy is introduced to the second suspended polyolefin recycling stream (G) to provide a temperature in the range from 65 to 95 °C during the washing;

h) removing the second aqueous washing solution (W2) and any material not floating on the surface of the second aqueous washing solution from the second suspended polyolefin recycling stream (G) to obtain a second washed polyolefin recycling stream (H);

i) drying the second washed polyolefin recycling stream (H), thereby obtaining a dried polyolefin recycling stream (I);

j) optionally separating the dried polyolefin recycling stream (I) into a light fraction and a heavy fraction polyolefin recycling stream (J);

k) optionally further sorting the heavy fraction polyolefin recycling stream (J) or, in the case that step j) is absent, the dried polyolefin recycling stream (I) by means of one or more optical sorters sorting for one or more target polyolefins by removing any flakes containing material other than the one or more target polyolefins, yielding a purified polyolefin recycling stream (K);

l) optionally melt extruding, preferably pelletizing, the purified polyolefin recycling stream (K), preferably wherein additives (Ad) are added in the melt state, to form an extruded, preferably pelletized, recycled polyolefin product (L); and

m) optionally aerating the recycled polyolefin product (L) or, in the case that step l) is absent, the purified polyolefin recycling stream (K) to remove volatile organic compounds, thereby generating an aerated recycled polyolefin product (M), being either an aerated extruded, preferably pelletized, recycled polyolefin product (M1) or aerated recycled polyolefin flakes (M2),

wherein the order of steps l) and m) can be interchanged, such that the purified polyolefin recycling stream (K) is first aerated to form aerated recycled polyolefin flakes (M2) that are subsequently extruded to form an extruded, preferably pelletized, aerated recycled polyolefin product (M3), which is the polypropylene mixed color blend A1 as described above.

Mixed-plastics polypropylene blend (Blend A2)

In another embodiment, the mixed-plastics polypropylene blend (Blend A2) has

(i) a crystalline fraction (CF) content determined according to CRYSTEX QC analysis in the range from 86.0 - 94.0 wt%, preferably 91.0 to 94.0 wt%, and
(ii) a soluble fraction (SF) content determined according to CRYSTEX QC analysis in the range from 6.0-14.0 wt%, more preferably 6.0 to 9.0 wt.-%, whereby

(iii) said crystalline fraction (CF) has a propylene content (C3(CF)) as determined by FT-IR spectroscopy calibrated by quantitative $^{13}$C-NMR spectroscopy, in the range from 95.0 to 99.0 wt.%; preferably 96.0 to 98.0 wt.-% and whereby (iv) said crystalline fraction (CF) has an ethylene content (C2(CF)), as determined by FT-IR spectroscopy calibrated by quantitative $^{13}$C-NMR spectroscopy, in the range from 1.0 to 5.0, preferably 2.0 to 4.0 wt.-%, more preferably 2.5 to 3.5 wt.-%; and

(v) said soluble fraction (SF) has an intrinsic viscosity (iV(SF)) in the range from 1.1 to below 1.5 dl/g, preferably 1.25 to below 1.45 dl/g;

whereby

(vi) the mixed-plastics polypropylene blend has a CIELAB color space (L*a*b*) of

- L* from 72.0 to 97.0 preferably from 80.0 to 97.0;
- a* from -5.0 to 0.0;
- b* from 0.0 to below 22.0.

The mixed-plastics polypropylene blend (Blend A2) has preferably a melt flow rate $MFR_2$ (ISO 1133, 2.16 kg, 230°C) of at least 4.0 g/10 min, preferably at least 6.0 g/10 min, more preferably at least 7.0 g/ 10 min, in particular in the range between 4.0 and 12.0 g/10 min, preferably between 6.0 and 10.0 g/10min, more preferably between 7.0 and 9.0 g/10min.

In an embodiment, the crystalline fraction (CF) content determined according to CRYSTEX QC analysis of Blend A2 is preferably in the range from 91.0 to 94.0 wt%, preferably 92 to 93 wt% and the soluble fraction (SF) content determined according to CRYSTEX QC analysis is in the range of 6.0 to 9.0 wt%, preferably 7.0 to 8.0 wt%.

The mixed-plastics polypropylene blend (Blend A2) preferably has a soluble fraction (SF) obtained by CRYSTEX QC analysis with a content of ethylene (C2(SF)), as determined by FT-IR spectroscopy calibrated by quantitative $^{13}$C-NMR spectroscopy, in the range from 10.0 to 25.0 wt%, more preferably 12.0 to 25.0 wt%, even more preferably 12.0 to 20.0 wt% and most preferably 14.0 to 19.0 wt%.

The mixed-plastics polypropylene blend (Blend-A2) is preferably characterized by an odor (VDA270-B3) of 4.0 or lower, preferably 3.0.

In a further aspect the mixed-plastics polypropylene blend has a Large Amplitude Oscillatory Shear - Non-Linear Factor (LAOS -NLF) (190°C; 1000%) higher than 2.3, whereby

$$LAOS - NLF = \left| \frac{G_1'}{G_3'} \right|$$

whereby

$G_1'$ is the first order Fourier Coefficient
$G_3'$ is the third order Fourier Coefficent

The mixed-plastics polypropylene blend has a tensile modulus (ISO 527-2 at a cross head speed of 1 mm/min; 23°C) using injection molded specimens as described in EN ISO 1873-2 (dog bone shape, 4 mm thickness) of at least 1200 MPa, preferably at least 1250 MPa. Usually the tensile modulus (ISO 527-2 at a cross head speed of 1 mm/min; 23°C) of the second embodiment will not be higher than 1400 MPa.

The mixed-plastics polypropylene blend turned out to have excellent processability reflected by a shear thinning factor (STF) being the ratio of eta 0.05 and eta 300 of above 13.0, preferably above 14.0.

The Charpy notched impact strength (non-instrumented, ISO 179-1 at +23 °C) of the mixed-plastics polypropylene blend is preferably higher than 6.0 kJ/m$^2$, more preferably higher than 8.0 kJ/m$^2$, most preferably higher than 8.3 kJ/m$^2$, such as 8.5 kJ/m$^2$.

In a specifically preferred embodiment, the mixed-plastics polypropylene blend (Blend A2) has a notched Charpy impact strength (NIS) (1eA) (non-instrumented, ISO 179-1 at +23 °C) according to ISO 179-1 eA at +23 °C on injection moulded specimens of 80 x 10 x 4 mm prepared according to EN ISO 1873-2 of at least 8.0 kJ/m$^2$, preferably 8.3 kJ/m$^2$, whereby further said soluble fraction (SF) obtained by CRYSTEX QC analysis has an ethylene content (C2(SF)), as determined by FT-IR spectroscopy calibrated by quantitative $^{13}$C-NMR spectroscopy, in the range from 12.0 to 20.0 wt% and further preferably the mixed-plastics polypropylene blend has a CIELAB color space (L*a*b) of

- L* from 72.0 to 97.0, preferably from 80.0 to 97.0;
- a* from -5.0 to 0.0;
- b* from 0.0 to below 22.0

In this specific preferred embodiment, the crystalline fraction (CF) content determined according to CRYSTEX QC analysis of Blend A2 is preferably in the range from 91.0 to 94.0 wt% and the soluble fraction (SF) content determined according to CRYSTEX QC analysis is in the range of 6.0 to 9.0 wt%.

A method of for obtaining a mixed-plastics polypropylene Blend A2 comprises the following steps:

a) providing post-consumer plastic trash;
b) sorting out goods made from polystyrene, polyamide, polyethylene, metals, paper and wood thereby providing a post-consumer plastic material;
c) sorting out colored goods thereby providing a post-consumer plastic material containing mainly white bottles, mainly white yoghurt cups, mainly white cans, mainly colorless panels, mainly colorless component parts and the like;
d) subjecting the selected post-consumer plastic material having mainly white color or being colorless to milling, washing in an aqueous solution with various detergents and subsequent drying, wind sifting and screening;
e) subjecting the pretreated post-consumer plastic material to a further sorting for eliminating non-polyolefin and colored parts;
f) extruding the material and yielding the polypropylene blend according to the present invention in the form of pellets;
g) optionally aeration which is preferably carried out at a temperature in a range of 100-130°C by preheating the post-consumer plastic material to such temperature using an air stream having a temperature of at least 100°C.

Glass fibers

As mentioned above, the polyolefin composition according to the invention comprises glass fibers, in particular short glass fibers. The glass fibers used in the polyolefin composition according to the invention preferably have an average fiber length in the range of from 2.0 to 10.0 mm, preferably in the range of 2.0 to 8.0 mm, even more preferably in the range of 2.0 to 6.0 mm, still more preferably in the range of 3.0 to 5.5 mm, even more preferably of 3.5 - 5.0 mm.

It is further preferred that the short glass fibers used in the fiber reinforced composite preferably have an average diameter of from 5 to 20 $\mu$m, more preferably from 8 to 18 $\mu$m, still more preferably 8 to 15 $\mu$m, even more preferably 10-15 $\mu$m, preferably of 11-14 $\mu$m, preferably 12-14 $\mu$m, more preferably of 12.3-13.7 $\mu$m, even more preferably of 12.5-13.5 $\mu$m.

In one preferred embodiment glass fibers are used which have a fiber length of 3.0 - 5.0 mm (average 4.0 mm), and a fiber diameter of 12.3 - 13.7 $\mu$m (average 13 $\mu$m). In another preferred embodiment glass fibers are used which have a fiber length of 3.5 - 5.5 mm (average 4.5 mm), and a fiber diameter of 12 - 14 $\mu$m (average 13 $\mu$m).

Coupling agent / dosing agent

In an embodiment, the polyolefin composition according to the invention comprises at least one coupling agent. The at least one coupling agent is a functionalized polypropylene, in particular a polypropylene functionalized with maleic anhydride (MAH). The amount of coupling agent in the polyolefin composition may be 1-2 wt%, such as 1 wt% or 1.25 wt%.

In one embodiment the polyolefin composition may comprise at least one dosing agent for accepting fillers/pigments during extrusion. The at least one dosing agent may be a polypropylene homopolymer with melt flow rates $MFR_2$ between 1 and 5 g/10 min, preferably between 2 and 3 g/10 min and a density between 800 and 100 kg/m$^3$, preferably between 900 and 950 kg/m$^3$. Such a polymer is commercially available from Borealis AG. The amount of dosing agent in the polyolefin composition may be 1-2 wt%, such as 1.2-1.4 wt%.

Additives

In a further embodiment the polyolefin composition may comprise further additives. Examples of additives for use in the composition are pigments or dyes (for example carbon black), stabilizers (anti-oxidant agents), anti-acids and/or anti-UVs, antistatic agents, nucleating agents and utilization agents (such as processing aid agents). Preferred additives are carbon black, at least one antioxidant and/or at least one UV stabilizer.

Generally, the amount of these additives is in the range of 0 to 5.0 wt%, preferably in the range of 0.01 to 3.0 wt%, more preferably from 0.01 to 2.0 wt% based on the weight of the total composition.

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1).

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-octoxy-benzophenone (CAS-No. 1843-05-6, Chimassorb 81). Preferred UV stabilizers may be low and/or high molecular weight UV stabilizers such as n-Hexadecyl- 3,5-di-t-butyl-4-hydroxybenzoate, a mixture of esters of 2,2,6,6-tetramethyl-4-piperidinol and higher fatty acids (mainly stearic acid) and/or Poly((6-morpholino-s-triazine-2,4-diyl) (1,2,2,6,6-pentamethyl-4-piperidyl)imino)hexameth-ylene (1,2,2,6,6-pentamethyl-4-piperidyl)imino)).

Alpha nucleating agents like sodium benzoate (CAS No. 532-32-1); 1,3:2,4-bis(3,4-dimethylbenzylidene) sorbitol (CAS 135861-56-2, Millad 3988).

Alpha nucleating agents can be further one of the following:

(i) soluble nucleating agents, like sorbitol derivatives, e.g. di(alkylbenzylidene)sorbitols as 1,3:2,4-dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, e.g. 1,2,3-trideoxy-4,6;5,7-bis-O-[(4-propylphenyl)methylene] nonitol, and benzene-trisamides like substituted 1,3,5-benzenetrisamides as N,N',N"-tris-tert-butyl-1,3,5-benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide.
(ii) salts of monocarboxylic acids and polycarboxylic acids, e.g. sodium benzoate or aluminum tert-butylbenzoate;
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and hydroxybis (2,4,8,10-tetra-tert- butyl-6-hydroxy-12Hdibenzo(d,g)(1,3,2) dioxaphosphocin 6-oxidato) aluminium; and
(iv) inorganic nucleating agents such as talcum.

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

Usually these additives are added in quantities of 100-2.000 ppm for each individual component of the polymer.

In the following, more specific embodiments of the present composition are described.

In a first embodiment a polyolefin composition is provided that comprises

a) 9-22 wt% (based on the overall weight of the polyolefin composition) of the at least one polypropylene homopolymer,
b) 4-6 wt% (based on the overall weight of the polyolefin composition) of at least one polypropylene block copolymer,
c) 25-45 wt% (based on the overall weight of the polyolefin composition) of the mixed-plastics polypropylene blend (Blend A1);
d) 38-42 wt% (based on the overall weight of the polyolefin composition) of glass fibers;

and optionally further additives, wherein the sum of all ingredients adds up to 100 wt%.

Such a first polyolefin composition may have

- a melt flow rate $MFR_2$ (230°C, 2.16 kg, measured according to ISO 1133) in the range of 3.0-8.0 g/10 min; preferably in the range of 3.3 - 7.0 g/10 min, more preferably in the range of 3.5 - 6.0 g/10 min;
- a tensile modulus (ISO 527-2) of at least 8500 MPa, preferably of at least 9000 MPa,
- a tensile stress at yield at 23°C of at least 95 MPa, preferably of at least 100 MPa,
- a tensile stress at break at 23°C of at least 95 MPa, preferably of at least 100 MPa,
- an impact strength (ISO179-1, Charpy 1eA +23 °C) of at least 9.0 $kJ/m^2$, preferably of at least 9.5 $kJ/m^2$.

In a second embodiment a polyolefin composition is provided that comprises

a) 9-22 wt% (based on the overall weight of the polyolefin composition) of the at least one polypropylene homopolymer,
b) 4-6 wt% (based on the overall weight of the polyolefin composition) of at least one polypropylene block copolymer,
c) 25-45 wt% (based on the overall weight of the polyolefin composition) of the mixed-plastics polypropylene blend (Blend A2);
d) 38-42 wt% (based on the overall weight of the polyolefin composition) of glass fibers;

and optionally further additives, wherein the sum of all ingredients adds up to 100 wt%.

Such a second polyolefin composition may have

- a melt flow rate $MFR_2$ (230°C, 2.16 kg, measured according to ISO 1133) in the range of 3.5 - 8.0 g/10 min; preferably in the range of 4.0 - 7.0 g/10 min, more preferably in the range of 4.3 - 6.0 g/10 min;
- a tensile modulus (ISO 527-2) of at least 8500 MPa, preferably of at least 8700 MPa,
- a tensile stress at yield at 23°C of at least 100 MPa, preferably of at least 105 MPa,
- a tensile stress at break at 23°C of at least 100 MPa, preferably of at least 105 MPa,
- an impact strength (ISO179-1, Charpy 1eA +23°C) of at least 10.0 $kJ/m^2$, preferably of at least 11 $kJ/m^2$.

It is to be noted that depending on the type of mixed-plastics polypropylene blend (i.e Blend A1 or Blend A2,) impact strength, tensile stress at yield and tensile stress at break differ. In particular, using a mixed-plastics polypropylene blend as in Blend A2 improves impact strength, tensile stress at yield and tensile stress at break.

It is appreciated that the present invention also refers to a process for producing the polyolefin compositions as defined herein. The process comprises the steps of

- providing a mixture of the at least one polypropylene homopolymer; the at least one polypropylene block copolymer, the mixed-plastics polypropylene blend of recycled material, glass fibers and the at least one coupling agent in the required amounts;
- melting the mixture in an extruder, and
- optionally pelletizing the obtained polyolefin composition.

For the purposes of the present invention, any suitable melting and mixing means known in the art may be used for carrying out the mixing and melting.

However, the melting and mixing step preferably takes place in a mixer and/or blender, high or low shear mixer, high-speed blender, or a twin-screw extruder. Most preferably, the melting and mixing step takes place in a twin-screw extruder such as a co-rotating twin-screw extruder. Such twin-screw extruders are well known in the art and the skilled person will adapt the melting and mixing conditions (such as melting temperature, screw speed and the like) according to the process equipment.

The polyolefin composition according to the invention can be used for a wide range of applications, for example for manufacturing structural products, pumps, fans, appliances, automotive parts, pipes and fittings, packaging, caps and closures.

## Experimental Section

The following Examples are included to demonstrate certain aspects and embodiments of the invention as described in the claims. It should be appreciated by those of skill in the art, however, that the following description is illustrative only and should not be taken in any way as a restriction of the invention.

## Test Methods

The following definitions of terms and determination methods apply for the above general description of the invention as well as to the below examples unless otherwise defined.

## a) CRYSTEX

### Determination of Crystalline and soluble fractions and their respective properties (IV and Ethylene content)

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

(Equation 1)

$$CH_3/1000C = a + b*Abs(CH) + c* Abs(CH_3) + d * (Abs(CH_3)/Abs(CH)) + e * (Abs(CH_3)/Abs(CH))^2$$    (Equation 2)

The constants a to e for equation 1 and a to f for equation 2 were determined by using least square regression analysis.

The CH$_3$/1000C is converted to the ethylene content in wt.-% using following relationship:

$$Wt.-\% \text{ (Ethylene in EP Copolymers)} = 100 - CH_3/1000TC * 0.3$$    (Equation 3)

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt%. The determined XS calibration is linear:

$$Wt.-\% \ XS = 1,01* Wt.-\% \ SF$$    (Equation 4)

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV \ (dL/g) = a* \ Vsp/c \text{ (equation 5)}$$

The samples to be analyzed are weighed out in concentrations of 10mg/ml to 20mg/ml. To avoid injecting possible gels and/or polymers, which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt%] of the PP composition. During the second injection, the soluble fraction (at low temperature) and the crystalline fraction (at high temperature) with the crystallization cycle are measured (Wt% SF, Wt% C2, IV).

**b) Quantification of microstructure by NMR spectroscopy (calibration only)**

Quantitative nuclear-magnetic resonance (NMR) spectroscopy was used for calibration.

Quantitative 13C{1H} NMR spectra were recorded in the solution-state using a Bruker Avance Neo 400 NMR spectrometer operating at 400.15 and 100.62 MHz for 1H and 13C respectively. All spectra were recorded using a 13C optimized 10 mm extended temperature probe head at 125°C using nitrogen gas for all pneumatics. Approximately 200 mg of material was dissolved in approximately 3 ml of 1,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra.

Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer:

$$fE = ( E / ( P + E ) )$$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * ( fE * 28.06 ) / ( (fE * 28.06) + ((1\text{-}fE) * 42.08) ).$$

**c) Tensile modulus and tensile strain at yield / break** were measured according to ISO 527-2 (cross head speed = 1 mm/min; test speed 50 mm/min at 23 °C) using injection molded specimens as described in EN ISO 1873-2 (dog bone shape, 4 mm thickness). The measurement is done after 96 h conditioning time of the specimen.

**d) Impact strength** was determined as notched Charpy impact strength (1eA) (non-instrumented, ISO 179-1 at +23 °C) according to ISO 179-1 eA at +23 °C on injection moulded specimens of 80 x 10 x 4 mm prepared according to EN ISO 1873-2.

**e) Inorganic residues:** TGA according to DIN ISO 1172:1996 using a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The ash content was evaluated as the weight % at 850°C.

**f) MFR:** melt flow rates were measured with a load of 2.16 kg ($MFR_2$) at 230 °C. The melt flow rate is that quantity of polymer in grams, which the test apparatus standardized to ISO 1133 extrudes within 10 minutes at a temperature of 230 °C under a load of 2.16 kg.

**g) Amount of Metals**
determined by x ray fluorescence (XRF).

**h) Amount of Paper, Wood (for control purposes only)**

paper and wood can be determined by conventional laboratory methods including milling, floatation, microscopy and Thermogravimetric Analysis (TGA).

**i) Benzene content**

by **HS GC-MS 80°C/2h,** which is described as the following
**Static headspace analysis**

The parameters of the applied static headspace gas chromatography mass spectrometry (HS/GC/MS) method are described here.

4.000 $\pm$ 0.100 g sample were weighed in a 20 ml HS vial and tightly sealed with a PTFE cap.

The mass spectrometer was operated in scan mode and a total ion chromatogram (TIC) was recorded for each analysis. More detailed information on applicable method parameters and data evaluation are given below:

- HS parameter (Agilent G1888 Headspace Sampler)

| | |
|---|---|
| Vial equilibration time: | 120 min |
| Oven temperature: | 80 °C |
| Loop temperature: | 205 °C |
| Transfer line temperature: | 210 °C |

Low shaking

- GC parameter (Agilent 7890A GC System)

| | |
|---|---|
| Column: | ZB-WAX 7HG-G007-22 (30 m x 250 $\mu$m x 1 $\mu$m) |
| Carrier gas: | Helium 5.0 |
| Flow: | 2 ml/min |
| Split: | 5:1 |

| | |
|---|---|
| GC oven program: | 35 °C for 0.1 min |
| | 10 °C/min until 250 °C |
| | 250 °C for 1 min |

- MS parameter (Agilent 5975C inert XL MSD)

| | |
|---|---|
| Acquisition mode: | Scan |
| Scan parameters: | |
| Low mass: | 20 |
| High mass: | 200 |
| Threshold: | 10 |

- Software/Data evaluation

MSD ChemStation E.02.02.1431
MassHunter GC/MS Acquisition B.07.05.2479
AMDIS GC/MS Analysis Version 2.71
NIST Mass Spectral Library Version 2.0 g

- AMDIS deconvolution parameters

| | |
|---|---|
| Minimum match factor: | 80 |
| Threshold: | Low |

(continued)

| | |
|---|---|
| Scan direction: | High to Low |
| Data file format: | Agilent files |
| Instrument type: | Quadrupole |
| Component width: | 20 |
| Adjacent peak subtraction: | Two |
| Resolution: | High |
| Sensitivity: | Very high |
| Shape requirements: | Medium |
| Solvent tailing: | 44 m/z |
| Column bleed: | 207 m/z |
| Min. model peaks: | 2 |
| Min. S/N: | 10 |
| Min. certain peaks: | 0.5 |

Data evaluation

The TIC data were further deconvoluted with the aid of AMDIS software (see parameters stated above) and compared to a custom target library which was based on the mass spectral library (NIST). In the custom target library, the respective mass spectra of selected substances (e.g. benzene) were included. Only when the recognised peak showed a minimum match factor of 80 and an experienced mass spectroscopist confirmed the match, a substance was accepted as "tentatively identified".

In this study, the statement "below the limit of detection (< LOD)" referred to a condition where either the match factor was below 80 (AMDIS) or the peak as such was not even recognised. The results refer solely to the measured samples, time of measurement and the applied parameters.

### j) CIELAB color space (L*a*b*)

In the CIE L*a*b* uniform color space, measured according to DIN EN ISO 11664-4, the color coordinates are: L*-the lightness coordinate; a*-the red/green coordinate, with +a* indicating red, and -a* indicating green; and b*-the yellow/blue coordinate, with +b* indicating yellow, and -b* indicating blue. The L*, a*, and b* coordinate axis define the three dimensional CIE color space. Standard Konica/Minolta Colorimeter CM-3700A.

### k) Odor VDA270-B3

VDA 270 is a determination of the odor characteristics of trim-materials in motor vehicles. In this study, the odor is determined following VDA 270 (2018) variant B3. The odor of the respective sample is evaluated by each assessor according to the VDA 270 scale after lifting the jar's lid as little as possible. The hexamerous scale consists of the following grades: Grade 1: not perceptible, Grade 2: perceptible, not disturbing, Grade 3: clearly perceptible, but not disturbing, Grade 4: disturbing, Grade 5: strongly disturbing, Grade 6: not acceptable. Assessors stay calm during the assessment and are not allowed to bias each other by discussing individual results during the test. They are not allowed to adjust their assessment after testing another sample, either. For statistical reasons (and as accepted by the VDA 270) assessors are forced to use whole steps in their evaluation. Consequently, the odor grade is based on the average mean of all individual assessments, and rounded to whole numbers.

### l) Limonene detection

Limonene quantification can be carried out using solid phase microextraction (HS-SPME-GC-MS) by standard addition.

50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1 mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fibre at 60°C for 20 minutes. Desorption is carried out directly in the heated injection port of a GCMS system at 270°C.

GCMS Parameters:

    Column: 30 m HP 5 MS 0.25*0.25
    Injector: Splitless with 0.75 mm SPME Liner, 270°C
    Temperature program: -10°C (1 min)
    Carrier gas: Helium 5.0, 31 cm/s linear velocity, constant flow
    MS: Single quadrupole, direct interface, 280°C interface temperature
    Acquisition: SIM scan mode
    Scan parameter: 20-300 amu
    SIM Parameter: m/Z 93, 100 ms dwell time

### m) Fatty acid detection

Fatty acid quantification is carried out using headspace solid phase micro-extraction (HS-SPME-GC-MS) by standard addition.

50 mg ground samples are weighed in 20 mL headspace vial and after the addition of limonene in different concentrations and a glass coated magnetic stir bar the vial is closed with a magnetic cap lined with silicone/PTFE. 10 $\mu$L Micro-capillaries are used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode is used for all acids except propanoic acid, here ion 74 is used.

GCMS Parameter:

    Column: 20 m ZB Wax plus 0.25*0.25
    Injector: Split 5:1 with glass lined split liner, 250°C
    Temperature program: 40°C (1 min) @6°C/min to 120°C, @15°C to 245 °C (5 min)
    Carrier: Helium 5.0, 40 cm/s linear velocity, constant flow
    MS: Single quadrupole, direct interface, 220°C inter face temperature
    Acquisition: SIM scan mode
    Scan parameter: 46-250 amu 6.6 scans/s
    SIM Parameter: m/z 60, 74, 6.6 scans/s

### n) Presence of polyamide-6 and polystyrene

By FTIR spectroscopy using the absorption of the band at 1601 cm$^{-1}$ (PS) and 3300 cm$^{-1}$ (PA6).

### o) Determination of contaminations on the plaques

The plaques are injection-moulded, 150x80x2mm dimension. Then, a high- resolution image (photograph) is taken on the 5 plaques (putting them close to each other). The image is then analyzed by a software allowing an automatic counting of the number of visual defects (by naked-eyes) due to contaminations.

### p) Dynamic Shear Measurements (Eta(2.7kPa) and Eta(300rad/s))

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression-moulded plates, using nitrogen atmosphere and setting a strain within the linear viscoelastic regime. The oscillatory shear tests were done at 230°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \tag{1}$$

If the applied strain is within the linear viscoelastic regime, the resulting sinusoidal stress response can be given by

$$\sigma(t) = \sigma_0 \sin(\omega t + \delta) \tag{2}$$

where

$\sigma_0$ and $\gamma_0$ are the stress and strain amplitudes, respectively
$\omega$ frequency is the angular
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan $\delta$ which can be expressed as follows:

$$G' = \frac{\sigma_0}{\gamma_0} \cos\delta \ [\text{Pa}] \tag{3}$$

$$G' = \frac{\sigma_0}{\gamma_0} \sin\delta \ [\text{Pa}] \tag{4}$$

$$G^* = G' + iG'' \ [\text{Pa}] \tag{5}$$

$$\eta^* = \eta' - i\eta'' \ [\text{Pa.s}] \tag{6}$$

$$\eta' = \frac{G''}{\omega} \ [\text{Pa.s}] \tag{7}$$

$$\eta'' = \frac{G'}{\omega} \ [\text{Pa.s}] \tag{8}$$

ETA(x kPa) is determined according with equation 9.

$$ETA(x\ kPa) = Eta^* \ \ for \ (G^* = x\ kPa) \ [\text{Pa.s}] \tag{9}$$

For example, the ETA(2.7 kPa) is the defined by the value of the complex viscosity, determined for a value of complex modulus equal to 2.7 kPa.
Eta (x rad/s) is determined according with equation 10.

$$ETA(x\ rad/s) = Eta^* \ \ for \ (\omega = x\ rad/s) \ [\text{Pa.s}] \tag{10}$$

For example, the ETA(300 rad/s) is defined by the value of the complex viscosity, determined at a frequency sweep of 300 rad/s.

**q) Shear Thinning Factor (STF) is defined as**

$$\text{STF} = \frac{\text{Eta}^* \text{ for } (\omega = 0.05 \text{ rad/s})}{\text{Eta}^* \text{ for } (\omega = 300 \text{ rad/s})} \qquad (11)$$

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"- Interpolate y-values to x-values from parameter"* and the *"logarithmic interpolation type"* were applied ([1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362; [2] The influence of molecular structure on some rheological properties of polyethylene", Heino, E.L., Borealis Polymers Oy, Porvoo, Finland, Annual Transactions of the Nordic Rheology Society, 1995.) [3] Definition of terms relating to the non-ultimate mechanical properties of polymers, Pure & Appl. Chem., Vol. 70, No. 3, pp. 701-754, 1998.)

**r) LARGE AMPLITUDE OSCILLATORY SHEAR (LAOS)**

The investigation of the non-linear viscoelastic behavior under shear flow was done resorting to Large Amplitude Oscillatory Shear. The method requires the application of a sinusoidal strain amplitude, $\gamma 0$, imposed at a given angular frequency, $\omega$, for a given time, t. Provided that the applied sinusoidal strain is high enough, a non-linear response is generated. The stress, $\sigma$ is in this case a function of the applied strain amplitude, time and the angular frequency. Under these conditions, the non-linear stress response is still a periodic function; however, it can no longer be expressed by a single harmonic sinusoid. The stress resulting from a non-linear viscoelastic response [0-0] can be expressed by a Fourier series, which includes the higher harmonics contributions:

$$\sigma(t, \omega, \gamma_0) = \gamma_0 . \sum_n \left[ G'_n(\omega, \gamma_0) . \sin(n\omega t) + G''_n(\omega, \gamma_0) . \cos(n\omega t) \right] \qquad (1)$$

with,

$\sigma$ - stress response
t - time
$\omega$- frequency
$\gamma_0$ - strain amplitude
$n$- harmonic number
$G'_n$- n order elastic Fourier coefficient
$G''_n$- n order viscous Fourier coefficient

The non-linear viscoelastic response was analysed applying Large Amplitude Oscillatory Shear (LAOS). Time sweep measurements were undertaken on an RPA 2000 rheometer from Alpha Technologies coupled with a standard biconical die. During the course of the measurement the test chamber is sealed and a pressure of about 6 MPa is applied. The LAOS test is done applying a temperature of 190 °C, an angular frequency of 0.628 rad/s and a strain of 1000 %. In order to ensure that steady state conditions are reached, the non-linear response is only determined after at least 20 cycles per measurement are completed. The Large Amplitude Oscillatory Shear Non-Linear Factor (LAOS_NLF) is defined by:

$$LAOS_{NLF}(190°C, 1000\%) = \left| \frac{G'_1}{G'_3} \right| \qquad (2)$$

where $G'_1$ - first order Fourier Coefficient

$G'_3$ - third order Fourier Coefficient

(J. M. Dealy, K. F. Wissbrun, Melt Rheology and Its Role in Plastics Processing: Theory and Applications; edited by Van Nostrand Reinhold, New York (1990); S. Filipe, Non-Linear Rheology of Polymer Melts, AIP Conference Proceedings 1152, pp. 168-174 (2009); M. Wilhelm, Macromol. Mat. Eng. 287, 83-105 (2002); S. Filipe, K. Hofstadler, K. Klimke, A. T. Tran, Non-Linear Rheological Parameters for Characterisation of Molecular Structural Properties in Polyolefins, Proceedings of Annual European Rheology Conference, 135 (2010); S. Filipe, K. Klimke, A. T. Tran, J. Reussner, Proceedings of Novel Non-Linear Rheological Parameters for Molecular Structural Characterisation of Polyolefins, Novel Trends in Rheology IV, Zlin, Check Republik (2011); K. Klimke, S. Filipe, A. T. Tran, Non-linear rheological parameters for characterization of molecular structural properties in polyolefins, Proceedings of European Polymer Conference, Granada, Spain (2011)).

In Table 1 several examples (comparative-CE; inventive-IE) are summarized.

Different blends of recycled material were used. The blends are characterized by the following properties:

Blend A1: C2 (CF) content 2-3 wt%, C2 (SF) content 24-25 wt%, C3 (CF) content 95-96 wt%, $MFR_2$ 14-17 g/ 10 min, tensile modulus 1300 - 1450 MPa, Impact strength (charpy test 23°C) 5-6 KJ/$m^2$

Blend A2: C2 (CF) content 2-3 wt%, C2 (SF) content 17-18 wt%, C3 (CF) content 97-98 wt%, $MFR_2$ 7-8 g/ 10 min, tensile modulus 1250 - 1300 MPa, Impact strength (charpy test 23°C) 8-9 KJ/$m^2$

Blends A1/A2 were obtained in the process for obtaining mixed plastics polypropylene as described previously including the step of further sorting out of old ('ancient') mainly colorless / natural plastic articles recognizable by discoloration (e.g. pronounced yellowing) and/or pronounced scratches of the mainly colorless / natural plastic article.

Further recyclate blends of mixed plastics polypropylene are used in comparative examples. These further blends are characterized by a higher ethylene C2 content.

Blend A3: total C2 content 9-10 wt%, C2 (CF) content 8-12 wt%, C2 (SF) content 29-34 wt%,

Blend A3 is a post-consumer recyclate polypropylene based material having a density (determined according to DIN EN ISO 1183) of 920 kg/$m^3$, a melt flow rate (determined according to DIN EN ISO 1133, 230 °C/2.16 kg) of 14.1 g/10 min, a moisture content (determined via a moisture infrared analyzer, 105 °C) of less than 0.1 %, a tensile modulus (determined according to DIN EN ISO 527, 1 mm/min) of more than 1100 MPa, a yield stress (determined according to DIN EN ISO 527, 50 mm/min) of more than 25 MPa, and a tensile strain (determined according to DIN EN ISO 527, 50 mm/min) of more than 180 %.

Blend A4: total C2 content 10-12 wt%, C2 (CF) content 7-10 wt%, C2 (SF) content 24-34 wt%,

Blend A4 is a post-consumer recyclate polypropylene based material having a density (determined according to DIN EN ISO 1183) of 916 kg/$m^3$, a melt flow rate (determined according to DIN EN ISO 1133, 230 °C/2.16 kg) of 36 g/10 min, a moisture content (determined via a moisture infrared analyzer, 105 °C) of less than 0.1 %, a tensile modulus (determined according to DIN EN ISO 527, 1 mm/min) of more than 1100 MPa, a yield stress (determined according to DIN EN ISO 527, 50 mm/min) of more than 24 MPa, and a tensile strain (determined according to DIN EN ISO 527, 50 mm/min) of more than 18 %.

Table 1 refers to polyolefin compositions comprising:

- Comparative Example (CE1): one polypropylene homopolymer (PPH-2); blend of recycled material (Blend A1) and 20 wt% Glass Fibers;
- Comparative Example (CE2): blend of recycled material (Blend A1) and 30 wt% Glass Fibers;
- Comparative Example (CE3): one polypropylene homopolymer (PPH-1), blend of recycled material (Blend A1) and 30 wt% Glass Fibers;
- Comparative Example (CE4): one polypropylene homopolymer (PPH-2), one polypropylene block copolymer (BCP-1) and 40 wt% Glass Fibers;
- Comparative Example (CE5): blend of recycled material (Blend A1) and 40 wt% Glass Fibers;
- Comparative Example (CE6): one polypropylene homopolymer (PPH-2), one polypropylene block copolymer (BCP-1), blend of recycled material (Blend A3) and 40 wt% Glass Fibers;
- Comparative Example (CE7): one polypropylene homopolymer (PPH-2), one polypropylene block copolymer (BCP-1), blend of recycled material (Blend A4) and 40 wt% Glass Fibers;
- Inventive Example (IE1): one polypropylene homopolymer (PPH-2), one polypropylene block copolymer (BCP-1), blend of recycled material (Blend A1) and 40 wt% Glass Fibers;
- Inventive Example (IE2): one polypropylene homopolymer (PPH-2), one polypropylene block copolymer (BCP-1), blend of recycled material (Blend A1) and 40 wt% Glass Fibers;
- Inventive Example (IE3): one polypropylene homopolymer (PPH-2), one polypropylene block copolymer (BCP-1), blend of recycled material (Blend A2) and 40 wt% Glass Fibers;

Glass fibers may be obtained from one of the following suppliers: OC (Owens Corning), PPG / NEG, Johns Manville, 3B, Jushi, Taiwan Glass, Camelyaf, CPIC, Taishan, Glass fibers 1.2. (average length 4 mm, average diameter 13 μm) and 4.1 (average length 4.5 mm, average diameter 13 μm) are used.

The following additives were used: Antioxidants: AO1 (Irganox 1010 (FF)), AO2 (Irganox B 225 (FF)), AO3 (Irganox PS-802 FL); Black Pigment (Plasblak PE6121, commercially available from Cabot); Dosing agent: HC001A-B1, PP homopolymer power; Coupling agent: AP 1.5, polypropylene highly functionalized with maleic anhydride.

As can be seen in Table 1 the values for tensile strength measured on the IE1, IE2, IE3 is higher than CE1-CE3 and CE5-CE7. Additionally, IE1, IE2, and IE3 offer a tensile modulus of > 8.8 GPa significantly higher than offered by the CE1-CE3. In addition, the charpy impact strength is higher for IE1-IE3 over any of CE1-CE3 and CE6-CE7. Only CE4 (examples without any recycled material blend) has better tensile modulus and tensile strength than any of IE1-IE3.

It is to be noted that IE1-IE3 using a recyclate blend with a lower C2 content than the recyclate in CE6-CE7 both having a higher C2 content provides polyolefin compositions with improved tensile strength and impact strength (charpy).

Table 1

| Components | unit | CE1 | CE2 | CE3 | CE4 | CE5 | CE6 | CE7 | IE1 | IE2 | IE3 |
|---|---|---|---|---|---|---|---|---|---|---|---|
| Glass 1.2 | wt% | 20 | 30 | 30 | 40 | 40 | 40 | 40 | 40 | 40 | 40 |
| PPH-2 | wt% | 45.3 | | | 47.2 | | 9.8 | 9.8 | 21.6 | 9.8 | 9.8 |
| PPH-1 | | | | 33.4 | | | | | | | |
| BCP-1 | wt% | | | | 8 | | 4 | 4 | 6 | 4 | 4 |
| Additives | wt% | 3.7 | 3.7 | 3.7 | 4 | 4 | 4 | 4 | 4 | 4 | 4 |
| Carbon Black | wt% | | | | 0.8 | 0.8 | 0.8 | 0.8 | 0.8 | 0.8 | 0.8 |
| Blend A1 | wt% | | 66.3 | 32.9 | | 55.2 | | | 27.6 | 41.4 | |
| Blend A2 | wt% | 31 | | | | | | | | | 41.4 |
| Blend A3 | | | | | | | 41.4 | | | | |
| Blend A4 | | | | | | | | 41.4 | | | |
| Total | | 100 | 100 | 100 | 100 | 100 | 100 | 100 | 100 | 100 | 100 |
| | | | | | | | | | | | |
| MFR 230 °C/2,16kg | [g/10min] | 5.37 | 6.95 | 4.59 | 2.18 | 5.3 | 4.08 | 5.84 | 3.52 | 3.47 | 4.35 |
| Tensile modulus 23°C | [Mpa] | 5090 | 6610 | 6794 | 10087 | 8887 | 8601 | 8952 | 9419 | 9122 | 8990 |
| Tensile stress at yield 23°C | [Mpa] | 73.17 | 80.9 | 87.75 | 131 | 97.17 | 92.36 | 95.39 | 106.78 | 101 | 109.3 |
| Tensile stress at break (@50 mm/min) 23°C | [Mpa] | | | | 131.71 | | | | | 100.7 | 108.61 |
| Flexural Modulus 23°C | [Mpa] | | | | 9259 | | | | | 8354 | 8014 |
| Flexural Strength 23°C | [Mpa] | | | | 179 | | | | | 137 | 145 |
| Charpy 1eA +23°C | [kJ/m2] | 7.71 | 8.74 | 8.4 | 12.87 | 9.61 | 8.07 | 8.43 | 9.65 | 9.86 | 11.46 |

**Claims**

1. Polyolefin composition comprising

   a) 5-30 wt% (based on the overall weight of the polyolefin composition) of at least one polypropylene homopolymer,

b) 1-15 wt% (based on the overall weight of the polyolefin composition) of at least one polypropylene block copolymer

c) 20-50 wt% (based on the overall weight of the polyolefin composition) of a mixed-plastics polypropylene blend of recycled material having

(i) a crystalline fraction (CF) content determined according to CRYSTEX QC analysis in the range from 85.0 - 95.0 wt%, and

(ii) a soluble fraction (SF) content determined according to CRYSTEX QC analysis in the range from 5.0 - 15.0 wt%, whereby

(iii) said crystalline fraction (CF) has a propylene content (C3(CF)) as determined by FT-IR spectroscopy calibrated by quantitative $^{13}$C-NMR spectroscopy, in the range from 93.0 - 99.0 wt%, and whereby

(iv) said crystalline fraction (CF) has an ethylene content (C2(CF)), as determined by FT-IR spectroscopy calibrated by quantitative $^{13}$C-NMR spectroscopy, in the range from 1.0 to 6.0 wt.-%; and

(v) said soluble fraction (SF) has an intrinsic viscosity (iV(SF)) in the range from 1.0-2.0 dl/g, and whereby

(vi) the mixed-plastics polypropylene blend has a CIELAB color space (L*a*b*) of

- L* from 30 to 97.0, in particular from 50 to 97.0;
- a* from -10.0 to 16.0, in particular from -8 to < 10.0;
- b* from -5.0 to 25.0, in particular from -2 to 22.0,

d) 35-55 wt% (based on the overall weight of the polyolefin composition) of glass fibers;
and optionally further additives, wherein the sum of all ingredients adds always up to 100 wt%,

wherein the polyolefin composition is **characterized by**

- a tensile modulus at 23°C of at least 7000 MPa (ISO 527-2),
- a tensile stress at yield at 23°C of at least 90 MPa (ISO 527-2), and
- an impact strength (ISO179-1, Charpy 1eA +23°C) of at least 8.5 kJ/m$^2$.

2. Polyolefin composition according to claim 1, **characterized in that** it comprises

a) 8-28 wt%, more preferably 9-22 wt% (based on the overall weight of the polyolefin composition) of the at least one polypropylene homopolymer,

b) 3-10 wt%, more preferably 4-8 wt% (based on the overall weight of the polyolefin composition) of at least one polypropylene block copolymer,

c) 25-45 wt%, more preferably 30-42 wt% (based on the overall weight of the polyolefin composition) of the mixed-plastics polypropylene blend;

d) 38-50 wt%, preferably 38-45 wt% (based on the overall weight of the polyolefin composition) of glass fibers;

and optionally further additives, wherein the sum of all ingredients adds up to 100 wt%.

3. Polyolefin composition according to one of the preceding claims, **characterized by** a melt flow rate MFR$_2$ (ISO 1133, 2.16 kg, 230°C) of at least 3.0 g/10 min, preferably at least 3.5 g/10 min, more preferably at least 4.0 g/ 10 min, in particular in the range between 3.0 and 15 g/10 min, preferably between 3.5 and 10 g/10min, more preferably between 4.0 and 10 g/10min.

4. Polyolefin composition according to one of the preceding claims **characterized by** a tensile modulus (ISO 527-2) of at least 8000 MPa, preferably of at least 8500 MPa, more preferably of at least 9000 MPa, in particular in a range between 8000 and 15000 MPa, more in particular in a range between 8000 and 10000 MPa.

5. Polyolefin composition according to one of the preceding claims, **characterized by** a tensile stress at yield at 23°C (50 mm/min, ISO 527-2) of at least 95 MPa, preferably of at least 100 MPa, more preferably of at least 105 MPa, in particular in a range between 90 and 200 MPa, more in particular in a range between 100 and 150 MPa.

6. Polyolefin composition according to one of the preceding claims, **characterized by** a tensile stress at break at 23°C (50 mm/min, ISO 527-2) of at least 90 MPa, preferably at least 95 MPa, more preferably of at least 100 MPa, even more preferably of at least 105 MPa, in particular in a range between 90 and 200 MPa, more in particular in a range between 100 and 150 MPa.

7. Polyolefin composition according to one of the preceding claims, **characterized by** an impact strength (ISO179-1, Charpy 1eA +23°C) of at least 9.0 kJ/m$^2$, preferably of at least 9.5 kJ/m$^2$, in particular in a range between 9.0 and 15.0 kJ/m$^2$, more in particular in a range between 9.5 and 13.0 kJ/m$^2$, even more particular in a range between 10.0 and 12.0 kJ/m$^2$.

8. Polyolefin composition according to one of the preceding claims, **characterized in that** the at least one polypropylene homopolymer comprises

- a polypropylene homopolymer (PPH-1) having a melt flow rate MFR$_2$ (230°C, 2.16 kg, measured according to ISO 1133) in the range of 5 to 15 g/10 min, preferably of 5 to 10 g/10min, more preferably of 8 g/10 min; and/or
- a polypropylene homopolymer (PPH-2) having a melt flow rate MFR$_2$ (230°C, 2.16 kg, measured according to ISO 1133) in the range of range of 10 to 30 g/10min, preferably of 15 to 25 g/10min, more preferably of 20 g/10 min.

9. Polyolefin composition according to one of the preceding claims, **characterized in that** the at least one polypropylene block copolymer has a melt flow rate (230°C/2.16 kg) of at least 0.2 g/10 min, preferably of at least 0.3 g/10 min, in particular in a range between 0.2 and 2.0 g/10 min, more in particular in a range between 0.2 and 1.5 g/10 min.

10. Polyolefin composition according to one of the preceding claims **characterized in that** the mixed-plastics polypropylene blend (Blend A1) has

(i) a crystalline fraction (CF) content determined according to CRYSTEX QC analysis in the range from 86.0 to 94.0 wt%, more preferably 90.0 to 94.0 wt.%, and
(ii) a soluble fraction (SF) content determined according to CRYSTEX QC analysis in the range from 6.0 to 14.0 wt%, more preferably 6.0 to 10.0 wt%, whereby
(iii) said crystalline fraction (CF) has a propylene content (C3(CF)) as determined by FT-IR spectroscopy calibrated by quantitative $^{13}$C-NMR spectroscopy, in the range from 93.0 - 99.0 wt%, preferably from 95.0 to 98.0 wt.%; and whereby
(iv) said crystalline fraction (CF) has an ethylene content (C2(CF)), as determined by FT-IR spectroscopy calibrated by quantitative $^{13}$C-NMR spectroscopy, in the range from 1 to 7 wt%; more preferably 2.0 to 5.0 wt%, even more preferably 2.5 to 3.5 wt%; and
(v) said soluble fraction (SF) has an intrinsic viscosity (iV(SF)) in the range from 1.2 to below 1.8 dl/g, preferably 1.40 to 1.70 dl/g;
whereby
(vi) the mixed-plastics polypropylene blend has a CIELAB color space (L*a*b*) of

- L* from 40 to 85, preferably from 50 to 75;
- a* from -8.00 to 10, more preferably -5.0 to 0.0;

b* from 0.0 to below 10.0, more preferably 0.0 to below 5.00.

11. Polyolefin composition according to one of the preceding claims, **characterized in that** the mixed-plastics polypropylene blend (Blend A2) has

(i) a crystalline fraction (CF) content determined according to CRYSTEX QC analysis in the range from 86.0 - 94.0 wt%, preferably 91.0 to 94.0 wt%, and
(ii) a soluble fraction (SF) content determined according to CRYSTEX QC analysis in the range from 6.0-14.0 wt%, more preferably 6.0 to 9.0 wt.-%, whereby
(iii) said crystalline fraction (CF) has a propylene content (C3(CF)) as determined by FT-IR spectroscopy calibrated by quantitative $^{13}$C-NMR spectroscopy, in the range from 95.0 to 99.0 wt.%; preferably 96.0 to 98.0 wt.-% and whereby
(iv) said crystalline fraction (CF) has an ethylene content (C2(CF)), as determined by FT-IR spectroscopy calibrated by quantitative $^{13}$C-NMR spectroscopy, in the range from 1.0 to 5.0, preferably 2.0 to 4.0 wt.-%, more preferably 2.5 to 3.5 wt.-%; and
(v) said soluble fraction (SF) has an intrinsic viscosity (iV(SF)) in the range from 1.1 to below 1.5 dl/g, preferably 1.25 to below 1.45 dl/g;
whereby

(vi) the mixed-plastics polypropylene blend has a CIELAB color space (L*a*b*) of

- L* from 72.0 to 97.0 preferably from 80.0 to 97.0;
- a* from -5.0 to 0.0;
- b* from 0.0 to below 22.0.

12. Polyolefin composition according to one of the preceding claims **characterized in that** the glass fibers have a length of 2.0 to 10.0 mm, preferably in the range of 2.0 to 8.0 mm, even more preferably in the range of 2.0 to 6.0 mm and a diameter of from 5 to 20 $\mu$m, more preferably from 8 to 18 $\mu$m, still more preferably 8 to 15 $\mu$m.

13. Polyolefin composition according to one of the preceding claims **characterized in that** it comprises at least one coupling agent, in particular a polypropylene functionalized with maleic anhydride (MAH).

14. An article comprising the polyolefin composition according to one of preceding the claims.

15. Article according to claim 14, **characterized in that** the article is one of structural products, pumps, fans, appliances, automotive parts, pipes and fittings.

**Patentansprüche**

1. Polyolefinzusammensetzung, die Folgendes umfasst:

a) 5-30 Gew.-% (bezogen auf das Gesamtgewicht der Polyolefinzusammensetzung) mindestens eines Polypropylenhomopolymers,
a) 1-15 Gew.-% (bezogen auf das Gesamtgewicht der Polyolefinzusammensetzung) mindestens eines Polypropylenblockcopolymers,
a) 20-50 Gew.-% (bezogen auf das Gesamtgewicht der Polyolefinzusammensetzung) einer Mischkunststoff-Polypropylenmischung aus recyceltem Material mit

(i) einem Gehalt an kristalliner Fraktion (CF), ermittelt nach der CRYSTEX QC Analyse, im Bereich von 85,0 - 95,0 Gew.-%, und
(i) einem Gehalt an löslicher Fraktion (SF), ermittelt nach der CRYSTEX QC Analyse, im Bereich von 5,0 - 15,0 Gew.-%, wobei
(iii) die kristalline Fraktion (CF) einen Propylengehalt (C3(CF)), ermittelt durch FT-IR-Spektroskopie, die mittels quantitativer $^{13}$C-NMR-Spektroskopie kalibriert wurde, im Bereich von 93,0 - 99,0 Gew.-% hat, und wobei
(iii) die kristalline Fraktion (CF) einen Ethylengehalt (C2(CF)), ermittelt durch FT-IR-Spektroskopie, die mittels quantitativer $^{13}$C-NMR-Spektroskopie kalibriert wurde, im Bereich von 1,0 - 6,0 Gew.-% hat; und
(v) die lösliche Fraktion (SF) eine Grenzviskosität (iV(SF)) im Bereich von 1,0 - 2,0 dl/g hat, und wobei
(vi) die Mischkunststoff-Polypropylenmischung folgenden CIELAB Farbraum (L*a*b*) hat:

- L* von 30 bis 97,0, insbesondere von 50 bis 97,0;
- a* von -10,0 bis 16,0, insbesondere von -8 bis < 10,0;
- b* von -5,0 bis 25,0, insbesondere von -2 bis 22,0,

d) 35-55 Gew.-% (bezogen auf das Gesamtgewicht der Polyolefinzusammensetzung) Glasfasern;
und optional weitere Zusatzstoffe, wobei sich die Summe aller Bestandteile immer auf 100 Gew.-% addiert, wobei die Polyolefinzusammensetzung **gekennzeichnet ist durch**

- einen Zugmodul bei 23°C von mindestens 7000 MPa (ISO 527-2),
- eine Streckspannung bei 23°C von mindestens 90 MPa (ISO 527-2), und
- eine Schlagzähigkeit (ISO179-1, Charpy 1eA +23°C) von mindestens 8,5 kJ/m$^2$.

2. Polyolefinzusammensetzung nach Anspruch 1, **dadurch gekennzeichnet, dass** sie Folgendes umfasst:

a) 8-28 Gew.-%, mehr bevorzugt 9-22 Gew.-% (bezogen auf das Gesamtgewicht der Polyolefinzusammensetzung) des mindestens einen Polypropylenhomopolymers,

b) 3-10 Gew.-%, mehr bevorzugt 4-8 Gew.-% (bezogen auf das Gesamtgewicht der Polyolefinzusammensetzung) mindestens eines Polypropylenblockcopolymers,

c) 25-45 Gew.-%, mehr bevorzugt 30-42 Gew.-% (bezogen auf das Gesamtgewicht der Polyolefinzusammensetzung) der Mischkunststoff-Polypropylenmischung;

d) 38-50 Gew.-%, vorzugsweise 38-45 Gew.-% (bezogen auf das Gesamtgewicht der Polyolefinzusammensetzung) Glasfasern;

und optional weitere Zusatzstoffe, wobei sich die Summe aller Bestandteile auf 100 Gew.-% addiert.

3. Polyolefinzusammensetzung nach einem der vorhergehenden Ansprüche, **gekennzeichnet durch** eine Schmelzflussrate $MFR_2$ (ISO 1133, 2,16 kg, 230°C) von mindestens 3,0 g/10 min, vorzugsweise mindestens 3,5 g/10 min, mehr bevorzugt mindestens 4,0 g/10 min, insbesondere im Bereich zwischen 3,0 und 15 g/10min, vorzugsweise zwischen 3,5 und 10 g/10 min, mehr bevorzugt zwischen 4,0 und 10 g/10 min.

4. Polyolefinzusammensetzung nach einem der vorhergehenden Ansprüche, **gekennzeichnet durch** einen Zugmodul (ISO 527-2) von mindestens 8000 MPa, vorzugsweise von mindestens 8500 MPa, mehr bevorzugt von mindestens 9000 MPa, insbesondere in einem Bereich zwischen 8000 und 15000 MPa, spezieller noch in einem Bereich zwischen 8000 und 10000 MPa.

5. Polyolefinzusammensetzung nach einem der vorhergehenden Ansprüche, **gekennzeichnet durch** eine Streckspannung bei 23°C (50 mm/min, ISO 527-2) von mindestens 95 MPa, vorzugsweise von mindestens 100 MPa, mehr bevorzugt von mindestens 105 MPa, insbesondere in einem Bereich zwischen 90 und 200 MPa, spezieller noch in einem Bereich zwischen 100 und 150 MPa.

6. Polyolefinzusammensetzung nach einem der vorhergehenden Ansprüche, **gekennzeichnet durch** eine Bruchspannung bei 23°C (50 mm/min, ISO 527-2) von mindestens 90 MPa, vorzugsweise mindestens 95 MPa, mehr bevorzugt von mindestens 100 MPa, noch mehr bevorzugt von mindestens 105 MPa, insbesondere in einem Bereich zwischen 90 und 200 MPa, spezieller noch in einem Bereich zwischen 100 und 150 MPa.

7. Polyolefinzusammensetzung nach einem der vorhergehenden Ansprüche, **gekennzeichnet durch** eine Schlagzähigkeit (ISO179-1, Charpy 1eA +23°C) von mindestens 9,0 $kJ/m^2$, vorzugsweise von mindestens 9,5 $kJ/m^2$, insbesondere in einem Bereich zwischen 9,0 und 15,0 $kJ/m^2$, spezieller noch in einem Bereich zwischen 9,5 und 13,0 $kJ/m^2$, sogar noch spezieller in einem Bereich zwischen 10,0 und 12,0 $kJ/m^2$,

8. Polyolefinzusammensetzung nach einem der vorhergehenden Ansprüche, **dadurch gekennzeichnet, dass** das mindestens eine Polypropylenhomopolymer Folgendes umfasst:

- ein Polypropylenhomopolymer (PPH-1) mit einer Schmelzflussrate $MFR_2$ (230°C, 2,16 kg, gemessen nach ISO 1133) im Bereich von 5 bis 15 g/10 min, vorzugsweise von 5 bis 10 g/10 min, mehr bevorzugt von 8 g/10 min; und/oder
- ein Polypropylenhomopolymer (PPH-2) mit einer Schmelzflussrate $MFR_2$ (230°C, 2,16 kg, gemessen nach ISO 1133) im Bereich von 10 bis 30 g/10 min, vorzugsweise von 15 bis 25 g/10 min, mehr bevorzugt von 20 g/10 min.

9. Polyolefinzusammensetzung nach einem der vorhergehenden Ansprüche, **dadurch gekennzeichnet, dass** das mindestens eine Polypropylenblockcopolymer eine Schmelzflussrate (230°C/2,16 kg) von mindestens 0,2 g/10 min, vorzugsweise von mindestens 0,3 g/10 min, insbesondere in einem Bereich zwischen 0,2 und 2,0 g/10 min, spezieller noch in einem Bereich zwischen 0,2 und 1,5 g/10 min hat.

10. Polyolefinzusammensetzung nach einem der vorhergehenden Ansprüche, **dadurch gekennzeichnet, dass** die Mischkunststoff-Polypropylenmischung (Mischung A1) Folgendes besitzt:

(i) einen Gehalt an kristalliner Fraktion (CF), ermittelt nach der CRYSTEX QC Analyse, im Bereich von 86,0 bis 94,0 Gew.-%, mehr bevorzugt 90.0 bis 94,0 Gew.-%, und

(ii) einen Gehalt an löslicher Fraktion (SF), ermittelt nach der CRYSTEX QC Analyse, im Bereich von 6,0 bis 14,0 Gew.-%, mehr bevorzugt 6,0 bis 10,0 Gew.-%, wobei

(iii) die kristalline Fraktion (CF) einen Propylengehalt (C3(CF)), ermittelt durch FT-IR-Spektroskopie, die mittels quantitativer $^{13}$C-NMR-Spektroskopie kalibriert wurde, im Bereich von 93,0 - 99,0 Gew.-%, vorzugsweise von 95,0 bis 98,0 Gew.-% hat; und wobei

(iv) die kristalline Fraktion (CF) einen Ethylengehalt (C2(CF)), ermittelt durch FT-IR-Spektroskopie, die mittels quantitativer $^{13}$C-NMR-Spektroskopie kalibriert wurde, im Bereich von 1 - 7 Gew.-%; mehr bevorzugt von 2,0 bis 5,0 Gew.-%, noch mehr bevorzugt von 2,5 bis 3,5 Gew.-% hat; und

(v) die lösliche Fraktion (SF) eine Grenzviskosität (iV(SF)) im Bereich von 1,2 bis unter 1,8 dl/g, vorzugsweise von 1,40 bis 1,70 dl/g hat; wobei

(vi) die Mischkunststoff-Polypropylenmischung folgenden CIELAB Farbraum (L*a*b*) hat:

- L* von 40 bis 85, vorzugsweise von 50 bis 75;
- a* von -8,00 bis 10, mehr bevorzugt -5,0 bis 0,0;
- b* von 0,0 bis unter 10,0, mehr bevorzugt 0,0 bis unter 5,00.

11. Polyolefinzusammensetzung nach einem der vorhergehenden Ansprüche, **dadurch gekennzeichnet, dass** die Mischkunststoff-Polypropylenmischung (Mischung A2) Folgendes besitzt:

(i) einen Gehalt an kristalliner Fraktion (CF), ermittelt nach der CRYSTEX QC Analyse, im Bereich von 86,0 bis 94,0 Gew.-%, vorzugsweise 91.0 bis 94,0 Gew.-%, und

(ii) einen Gehalt an löslicher Fraktion (SF), ermittelt nach der CRYSTEX QC Analyse, im Bereich von 6,0 bis 14,0 Gew.-%, mehr bevorzugt 6,0 bis 9,0 Gew.-%, wobei

(iii) die kristalline Fraktion (CF) einen Propylengehalt (C3(CF)), ermittelt durch FT-IR-Spektroskopie, die mittels quantitativer $^{13}$C-NMR-Spektroskopie kalibriert wurde, im Bereich von 95,0 bis 99,0 Gew.-%, vorzugsweise von 96,0 bis 98,0 Gew.-% hat; und wobei

(iv) die kristalline Fraktion (CF) einen Ethylengehalt (C2(CF)), ermittelt durch FT-IR-Spektroskopie, die mittels quantitativer $^{13}$C-NMR-Spektroskopie kalibriert wurde, im Bereich von 1,0 bis 5,0 Gew.-%; vorzugsweise von 2,0 bis 4,0 Gew.-%, mehr bevorzugt von 2,5 bis 3,5 Gew.-% hat; und

(v) die lösliche Fraktion (SF) eine Grenzviskosität (iV(SF)) im Bereich von 1,1 bis unter 1,5 dl/g, vorzugsweise von 1,25 bis unter 1,45 dl/g hat;
wobei

(vi) die Mischkunststoff-Polypropylenmischung folgenden CIELAB Farbraum (L*a*b*) hat

- L* von 72,0 bis 97,0 vorzugsweise von 80,0 bis 97,0;
- a* von -5,0 bis 0,0;
- b* von 0,0 bis unter 22,0.

12. Polyolefinzusammensetzung nach einem der vorhergehenden Ansprüche, **dadurch gekennzeichnet, dass** die Glasfasern eine Länge von 2,0 bis 10,0 mm, vorzugsweise im Bereich von 2,0 bis 8,0 mm, noch mehr bevorzugt im Bereich von 2,0 bis 6,0 mm, und einen Durchmesser von 5 bis 20 $\mu$m, mehr bevorzugt von 8 bis 18 $\mu$m, noch mehr bevorzugt von 8 bis 15 $\mu$m haben.

13. Polyolefinzusammensetzung nach einem der vorhergehenden Ansprüche, **dadurch gekennzeichnet, dass** sie mindestens ein Kopplungsmittel umfasst, insbesondere ein mit Maleinsäureanhydrid (MAH) funktionalisiertes Polypropylen.

14. Gegenstand, der eine Polyolefinzusammensetzung nach einem der vorhergehenden Ansprüche umfasst.

15. Gegenstand nach Anspruch 14, **dadurch gekennzeichnet, dass** es sich bei dem Gegenstand um eines von Bauprodukten, Pumpen, Ventilatoren, Haushaltsgeräten, Kraftfahrzeugteilen, Rohren und Armaturen handelt.

**Revendications**

1. Composition de polyoléfine comprenant

a) 5-30 % en poids (par rapport au poids total de la composition de polyoléfine) d'au moins un homopolymère de polypropylène,

b) 1-15 % en poids (par rapport au poids total de la composition de polyoléfine) d'au moins un copolymère séquencé de polypropylène,

c) 20-50 % en poids (par rapport au poids total de la composition de polyoléfine) d'un mélange de matières plastiques polypropylène de matériaux recyclés ayant

(i) une teneur en fraction cristalline (CF) déterminée selon l'analyse CRYSTEX QC dans la plage de 85,0 à 95,0 % en poids, et

(ii) une teneur en fraction soluble (FS) déterminée selon l'analyse CRYSTEX QC dans la plage de 5,0 à 15,0 % en poids, dans laquelle

(iii) ladite fraction cristalline (CF) a une teneur en propylène (C3(CF)) déterminée par spectroscopie FT-IR calibrée par spectroscopie quantitative $^{13}$C-NMR, dans la plage de 93,0 à 99,0 % en poids, et dans laquelle

(iv) ladite fraction cristalline (CF) a une teneur en éthylène (C2(CF)), déterminée par spectroscopie FT-IR calibrée par spectroscopie quantitative $^{13}$C-NMR, dans la plage de 1,0 à 6,0 % en poids ; et

(v) ladite fraction soluble (SF) a une viscosité intrinsèque (iV(SF)) dans la plage de 1,0 à 2,0 dl/g, et dans laquelle

(vi) le mélange de matières plastiques polypropylène a un espace colorimétrique CIELAB (L*a*b*) de

- L* de 30 à 97,0, en particulier de 50 à 97,0 ;
- a* de -10,0 à 16,0, en particulier de -8 à < 10,0 ;
- b* de -5,0 à 25,0, en particulier de -2 à 22,0,

d) 35-55 % en poids (par rapport au poids total de la composition de polyoléfine) de fibres de verre ;

et éventuellement d'autres additifs, la somme de tous les ingrédients étant toujours égale à 100 % en poids, dans laquelle la composition de polyoléfine est **caractérisée par**

- un module de traction à 23°C d'au moins 7000 MPa (ISO 527-2),
- une contrainte de traction à la limite d'élasticité à 23°C d'au moins 90 MPa (ISO 527-2), et
- une résistance aux chocs (ISO179-1, Charpy 1 eA +23°C) d'au moins 8,5 kJ/m$^2$.

2. Composition de polyoléfine selon la revendication 1, **caractérisée en ce qu'**elle comprend

a) 8-28 % en poids, plus préférentiellement 9-22 % en poids (par rapport au poids total de la composition de polyoléfine) de l'au moins un homopolymère de polypropylène,

b) 3-10 % en poids, plus préférentiellement 4-8 % en poids (par rapport au poids total de la composition de polyoléfine) d'au moins un copolymère séquencé de polypropylène,

c) 25-45 % en poids, plus préférentiellement 30-42 % en poids (par rapport au poids total de la composition de polyoléfine) du mélange de matières plastiques polypropylène,

d) 38-50 % en poids, de préférence 38-45 % en poids (par rapport au poids total de la composition de polyoléfine) de fibres de verre ;

et éventuellement d'autres additifs, la somme de tous les ingrédients étant égale à 100 % en poids.

3. Composition de polyoléfine selon l'une quelconque des revendications précédentes, **caractérisée par** un débit de matière fondue MFR$_2$ (ISO 1133, 2,16 kg, 230°C) d'au moins 3,0 g/10 min, de préférence d'au moins 3,5 g/10 min, plus préférentiellement d'au moins 4,0 g/10 min, en particulier dans la plage comprise entre 3,0 et 15 g/10 min, de préférence entre 3,5 et 10 g/10 min, plus préférentiellement entre 4,0 et 10 g/10 min.

4. Composition de polyoléfine selon l'une quelconque des revendications précédentes, **caractérisée par** un module de traction (ISO 527-2) d'au moins 8000 MPa, de préférence d'au moins 8500 MPa, plus préférentiellement d'au moins 9000 MPa, en particulier dans une plage comprise entre 8000 et 15000 MPa, plus particulièrement dans une plage comprise entre 8000 et 10000 MPa.

5. Composition de polyoléfine selon l'une quelconque des revendications précédentes, **caractérisée par** une contrainte de traction à la limite d'élasticité à 23°C (50 mm/min, ISO 527-2) d'au moins 95 MPa, de préférence d'au moins 100 MPa, plus préférentiellement d'au moins 105 MPa, en particulier dans une plage comprise entre 90 et 200 MPa, plus particulièrement dans une plage comprise entre 100 et 150 MPa.

6. Composition de polyoléfine selon l'une quelconque des revendications précédentes, **caractérisée par** une contrainte de traction à la rupture à 23°C (50 mm/min, ISO 527-2) d'au moins 90 MPa, de préférence d'au moins 95 MPa, plus préférentiellement d'au moins 100 MPa, encore plus préférentiellement d'au moins 105 MPa, en particulier dans une plage comprise entre 90 et 200 MPa, plus particulièrement dans une plage comprise entre 100 et 150 MPa.

7. Composition de polyoléfine selon l'une quelconque des revendications précédentes, **caractérisée par** une résistance aux chocs (ISO179-1, Charpy 1eA +23°C) d'au moins 9,0 kJ/m$^2$, de préférence d'au moins 9,5 kJ/m$^2$, en particulier dans une plage comprise entre 9,0 et 15,0 kJ/m$^2$, plus particulièrement dans une plage comprise entre 9,5 et 13,0 kJ/m$^2$, encore plus particulièrement dans une plage comprise entre 10,0 et 12,0 kJ/m$^2$.

8. Composition de polyoléfine selon l'une quelconque des revendications précédentes, **caractérisée en ce que** l'au moins un homopolymère de polypropylène comprend

- un homopolymère de polypropylène (PPH-1) ayant un débit de matière fondue MFR$_2$ (230°C, 2,16 kg, mesuré selon ISO 1133) compris dans la plage de 5 à 15 g/10 min, de préférence de 5 à 10 g/10 min, plus préférentiellement de 8 g/10 min ; et/ou
- un homopolymère de polypropylène (PPH-2) ayant un débit de matière fondue MFR$_2$ (230°C, 2,16 kg, mesuré selon ISO 1133) dans la plage comprise entre 10 et 30 g/10 min, de préférence entre 15 et 25 g/10 min, plus préférentiellement de 20 g/10 min.

9. Composition de polyoléfine selon l'une quelconque des revendications précédentes, **caractérisée en ce que** l'au moins un copolymère séquencé de polypropylène a un débit de matière fondue (230°C/2,16 kg) d'au moins 0,2 g/10 min, de préférence d'au moins 0,3 g/10 min, en particulier dans une plage comprise entre 0,2 et 2,0 g/10 min, plus particulièrement dans une plage comprise entre 0,2 et 1,5 g/10 min.

10. Composition de polyoléfine selon l'une quelconque des revendications précédentes, **caractérisée en ce que** le mélange de matières plastiques polypropylène (mélange A1) présente

(i) une teneur en fraction cristalline (CF) déterminée selon l'analyse CRYSTEX QC dans la plage de 86,0 à 94,0 % en poids, plus préférentiellement de 90,0 à 94,0 % en poids, et
(ii) une teneur en fraction soluble (FS) déterminée selon l'analyse CRYSTEX QC dans la plage de 6,0 à 14,0 % en poids, plus préférentiellement de 6,0 à 10,0 % en poids, dans laquelle
(iii) ladite fraction cristalline (CF) a une teneur en propylène (C3(CF)) déterminée par spectroscopie FT-IR calibrée par spectroscopie quantitative $^{13}$C-NMR, dans la plage de 93,0 à 99,0 % en poids, de préférence de 95,0 à 98,0 % en poids, et dans laquelle
(iv) ladite fraction cristalline (CF) a une teneur en éthylène (C2(CF)), déterminée par spectroscopie FT-IR calibrée par spectroscopie quantitative $^{13}$C-NMR, dans la plage de 1 à 7 % en poids ; plus préférentiellement de 2,0 à 5,0 % en poids, encore plus préférentiellement de 2,5 à 3,5 % en poids, et
(v) ladite fraction soluble (SF) a une viscosité intrinsèque (iV(SF)) dans la plage de 1,2 à inférieur à 1,8 dl/g, de préférence de 1,40 à 1,70 dl/g ; dans laquelle
(vi) le mélange de matières plastiques polypropylène a un espace colorimétrique CIELAB (L*a*b*) de

- L* de 40 à 85, de préférence de 50 à 75 ;
- a* de -8,00 à 10, plus préférentiellement de -5,0 à 0,0 ;
- b* de 0,0 à inférieur à 10,0, plus préférentiellement de 0,0 à inférieur à 5,00.

11. Composition de polyoléfine selon l'une quelconque des revendications précédentes, **caractérisée en ce que** le mélange de matières plastiques polypropylène (mélange A2) présente

(i) une teneur en fraction cristalline (CF) déterminée selon l'analyse CRYSTEX QC dans la plage de 86,0 à 94,0 % en poids, de préférence de 91,0 à 94,0 % en poids, et
(ii) une teneur en fraction soluble (FS) déterminée selon l'analyse CRYSTEX QC dans la plage de 6,0 à 14,0 % en poids, plus préférentiellement de 6,0 à 9,0 % en poids, dans laquelle
(iii) ladite fraction cristalline (CF) a une teneur en propylène (C3(CF)) déterminée par spectroscopie FT-IR calibrée par spectroscopie quantitative $^{13}$C-NMR, dans la plage de 95,0 à 99,0 % en poids, de préférence de 96,0 à 98,0 % en poids, et dans laquelle
(iv) ladite fraction cristalline (CF) a une teneur en éthylène (C2(CF)), déterminée par spectroscopie FT-IR calibrée par spectroscopie quantitative $^{13}$C-NMR, dans la plage de 1,0 à 5,0 % en poids, de préférence de 2,0 à 4,0 % en poids, plus préférentiellement de 2,5 à 3,5 % en poids ; et
(v) ladite fraction soluble (SF) a une viscosité intrinsèque (iV(SF)) dans la plage de 1,1 à inférieur à 1,5 dl/g, de préférence de 1,25 à inférieur à 1,45 dl/g ;

dans laquelle

(vi) le mélange de matières plastiques polypropylène a un espace colorimétrique CIELAB (L*a*b*) de

- L* de 72,0 à 97,0, de préférence de 80,0 à 97,0 ;
- a* de -5,0 à 0,0 ;
- b* de 0,0 à inférieur à 22,0.

**12.** Composition de polyoléfine selon l'une quelconque des revendications précédentes, **caractérisée en ce que** les fibres de verre ont une longueur de 2,0 à 10,0 mm, de préférence dans la plage comprise entre 2,0 et 8,0 mm, encore plus préférentiellement dans la plage comprise entre 2,0 et 6,0 mm et un diamètre de 5 à 20 μm, plus préférentiellement de 8 à 18 μm, encore plus préférentiellement de 8 à 15 μm.

**13.** Composition de polyoléfine selon l'une quelconque des revendications précédentes, **caractérisée en ce qu'**elle comprend au moins un agent de couplage, en particulier un polypropylène fonctionnalisé par de l'anhydride maléique (MAH).

**14.** Article comprenant la composition de polyoléfine selon l'une quelconque des revendications précédentes.

**15.** Article selon la revendication 14, **caractérisé en ce que** l'article fait partie des produits structuraux, des pompes, des ventilateurs, des appareils, des pièces automobiles, des tuyaux et des raccords.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014167493 A1
- EP 2845876 B1
- EP 3406662 A1
- WO 2018086959 A1
- WO 2022084236 A1
- WO 03031174 A2

### Non-patent literature cited in the description

- **BAJRACHARYA et al.** Experimental and theoretical studies on the properties of injection moulded glass fibre reinforced mixed plastics composites. *Composites Part A: Applied Science and Manufacturing*, 2016, vol. 84, 393-405
- **BAJRACHARYA et al.** Durability characteristics and property prediction of glass fibre reinforced mixed plastics composites. *Composites Part B: Engineering*, 2017, vol. 116, 16-29
- **DEMETS, RUBEN et al.** Development and application of an analytical method to quantify odour removal in plastic waste recycling processes. *Resources, Conservation and Recycling*, 2020, vol. 161, 104907
- *CHEMICAL ABSTRACTS*, 6683-19-8
- *CHEMICAL ABSTRACTS*, 31570-04-4
- *CHEMICAL ABSTRACTS*, 693- 36-7
- *CHEMICAL ABSTRACTS*, 11097-59-9
- *CHEMICAL ABSTRACTS*, 1592-23-0
- *CHEMICAL ABSTRACTS*, 557-05-1
- *CHEMICAL ABSTRACTS*, 60676-86-0
- *CHEMICAL ABSTRACTS*, 7631-86-9
- *CHEMICAL ABSTRACTS*, 112926-00-8
- *CHEMICAL ABSTRACTS*, 1318-74-7
- *CHEMICAL ABSTRACTS*, 1344-00-9
- *CHEMICAL ABSTRACTS*, 92704-41-1
- *CHEMICAL ABSTRACTS*, 1327-36-2
- *CHEMICAL ABSTRACTS*, 1344-95-2
- *CHEMICAL ABSTRACTS*, 1344-01-0
- *CHEMICAL ABSTRACTS*, 52829-07-9
- *CHEMICAL ABSTRACTS*, 1843-05-6
- *CHEMICAL ABSTRACTS*, 532-32-1
- *CHEMICAL ABSTRACTS*, 135861-56-2
- *CHEMICAL ABSTRACTS*, 97593-29-8
- *CHEMICAL ABSTRACTS*, 71786-60-2
- *CHEMICAL ABSTRACTS*, 61791-31-9
- *CHEMICAL ABSTRACTS*, 204-393-1
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 128-37-0
- **G. SINGH** ; **A. KOTHARI** ; **V. GUPTA**. *Polymer Testing*, 2009, vol. 28 (5), 475
- **Z. ZHOU** ; **R. KUEMMERLE** ; **X. QIU** ; **D. REDWINE** ; **R. CONG** ; **A. TAHA** ; **D. BAUGH** ; **B. WINNIFORD**. *J. Mag. Reson*, 2007, vol. 187, 225
- **V. BUSICO** ; **P. CARBONNIERE** ; **R. CIPULLO** ; **C. PELLECCHIA** ; **J. SEVERN** ; **G. TALARICO**. *Macromol. Rapid Commun.*, 2007, vol. 28, 1128
- **CHENG, H. N.** *Macromolecules*, 1984, vol. 17, 1950
- **W-J. WANG** ; **S. ZHU**. *Macromolecules*, 2000, vol. 33, 1157
- **HEINO, E.L** ; **LEHTINEN, A** ; **TANNER J.** ; **SEPPÄLÄ, J.** ; **NESTE OY** ; **PORVOO, FINLAND**. *Theor. Appl. Rheol., Proc. Int. Congr. Rheol, 11th*, 1992, vol. 1, 360-362
- **HEINO, E.L.** ; **BOREALIS POLYMERS OY** ; **PORVOO, FINLAND**. *Annual Transactions of the Nordic Rheology Society*, 1995
- Definition of terms relating to the non-ultimate mechanical properties of polymers. *Pure & Appl. Chem.*, 1998, vol. 70 (3), 701-754
- **J. M. DEALY** ; **K. F. WISSBRUN**. Melt Rheology and Its Role in Plastics Processing: Theory and Applications. 1990
- **S. FILIPE**. Non-Linear Rheology of Polymer Melts. *AIP Conference Proceedings*, 2009, vol. 1152, 168-174
- **M. WILHELM**. *Macromol. Mat. Eng*, 2002, vol. 287, 83-105

- **S. FILIPE** ; **K. HOFSTADLER** ; **K. KLIMKE** ; **A. T. TRAN**. Non-Linear Rheological Parameters for Characterisation of Molecular Structural Properties in Polyolefins. *Proceedings of Annual European Rheology Conference*, 2010, vol. 135

- **S. FILIPE** ; **K. KLIMKE** ; **A. T. TRAN** ; **J. REUSSNER**. Proceedings of Novel Non-Linear Rheological Parameters for Molecular Structural Characterisation of Polyolefins. *Novel Trends in Rheology IV, Zlin, Check Republik*, 2011
- **K. KLIMKE** ; **S. FILIPE** ; **A. T. TRAN**. Non-linear rheological parameters for characterization of molecular structural properties in polyolefins. *Proceedings of European Polymer Conference*, 2011